# EUROPEAN PATENT SPECIFICATION

(11) **EP 4 539 506 B1**
(45) Date of publication and mention of the grant of the patent: **15.07.2026**
(21) Application number: 23838492.9
(22) Date of filing: 21.04.2023
(51) Int. Cl.: H04R 9/06, H04M 1/03, H04R 1/34

(54) **ELECTRONIC APPARATUS**
ELEKTRONISCHES GERÄT
APPAREIL ÉLECTRONIQUE

(30) Priority: 12.07.2022 CN 202210815072
(43) Date of publication of application: 16.04.2025
(73) Proprietor: Honor Device Co., Ltd., Shenzhen, Guangdong 518040 (CN)
(72) Inventor: WU, Jiang, Shenzhen, Guangdong 518040 (CN); WANG, Chuanguo, Shenzhen, Guangdong 518040 (CN)
(74) Representative: Gill Jennings & Every LLP
(86) International application number: PCT/CN2023/089720
(87) International publication number: WO 2024/011991

(56) References cited:
- EP-A1- 4 550 836
- CN-A- 110 933 211
- CN-A- 111 031 163
- CN-A- 111 031 163
- CN-A- 113 099 364
- CN-A- 113 099 364
- CN-A- 114 157 939
- CN-U- 212 324 354
- CN-U- 216 700 057
- CN-U- 216 700 234

## Description

### TECHNICAL FIELD

Embodiments of this application relate to the field of electronic device technologies, and in particular, to an electronic device configured with a speaker module.

### BACKGROUND

A speaker module is configured to restore an audio electrical signal such as music and speech into a sound, has a function of supporting audio external playback, and is increasingly widely used in an electronic device such as a mobile phone or a tablet computer.

Using a mobile phone as an example, with continuous development of society and continuous improvement of user requirements, more devices are integrated into the mobile phone, causing a space inside an electronic device to become increasingly tight. However, in a conventional solution, a speaker module occupies a large space in a longitudinal direction of the mobile phone during assembly. As a result, the speaker module is unable to be mounted in some types of mobile phones.

Therefore, how to provide a solution to overcome or alleviate the foregoing defects is still a technical problem to be urgently solved by those skilled in the art.

In the prior art, EP4550836A1 relates to an electronic device including a device housing, a sound apparatus, and a screen; CN113099364A relates to electronic equipment comprising a shell and a sound production device having a fixed shell, a magnetic circuit system and two vibration systems; and CN111031163A relates to electronic equipment comprising a main body and a sound production device.

### SUMMARY

Embodiments of this application provide an electronic device. A speaker module in the electronic device occupies a small space in a longitudinal direction and can be adapted to assembly of an electronic device with a limited longitudinal space.

According to a first aspect, an embodiment of this application provides an electronic device, and the electronic device may specifically be a mobile phone, a tablet computer, and the like. The electronic device includes a first housing, a second housing, a speaker module, and a speaker bracket. The first housing and the second housing are connected to each other along a thickness direction of the electronic device, and can form an external structure of the electronic device. The second housing is further provided with a first sound outlet hole and a second sound outlet hole. The speaker module includes a first sound emitting portion and a second sound emitting portion, the first sound emitting portion faces the first housing, and the second sound emitting portion faces the second housing. The speaker bracket is provided with a communication cavity, and at least part of the communication cavity extends along a transverse direction of the electronic device. The speaker bracket has a first connecting end and a second connecting end spaced apart in the transverse direction of the electronic device. The first connecting end is sealing assembled to the first sound emitting portion, so that the first sound emitting portion is capable of emitting a sound wave into the communication cavity, and the second connecting end is sealing assembled to the second housing, so that the communication cavity is in communication with the first sound outlet hole. The second sound emitting portion is assembled to the second housing, so that the second sound emitting portion is capable of emitting a sound wave into the second sound outlet hole.

By using this solution, the speaker module and the speaker bracket are arranged in the thickness direction of the electronic device, and at least part of the communication cavity of the speaker bracket extends in the transverse direction of the electronic device, so that the first connecting end and the second connecting end are spaced apart in the transverse direction of the electronic device. This layout method can make full use of a transverse space of the electronic device to reduce occupation on a longitudinal space of the electronic device, and can better reduce a mounting space occupied by the speaker module in the longitudinal direction, thereby better adapting to the mounting of the electronic device with a limited longitudinal space.

It can be understood that for an electronic device with a sufficient longitudinal space, when the foregoing solution is adopted, since the speaker module occupies less mounting space in the longitudinal direction, there may be excess longitudinal space in the electronic device, and the excess longitudinal space may further be used to mount other components, so that more components can exist in the longitudinal direction of the electronic device.

That is to say, the solution provided in embodiments of this application may be applied to the electronic device with a relatively limited longitudinal space, or may be applied to the electronic device with a relatively sufficient longitudinal space, and types of electronic devices to which the solution is adapted may further increase.

In a first implementation of the first aspect: the second housing is provided with a first sound outlet cavity, and the first sound outlet cavity is configured to communicate the first sound outlet hole and the communication cavity. The first sound outlet cavity can form a buffer space between the communication cavity and the first sound outlet hole to guide the sound wave in the communication cavity to the first sound outlet hole for playback, which is beneficial to reducing eddy currents during sound wave transmission and reducing noise, thereby ensuring a better sound playback quality.

In specific practice, the first sound outlet cavity may not be provided. In this case, the communication cavity may be directly in communication with the first sound outlet hole.

Based on the first implementation of the first aspect, the application further provides a second implementation of the first aspect that is not claimed: the second housing includes a middle frame, the middle frame includes a frame and a middle plate, the middle plate is provided with a first hole portion, an inner space of the first hole portion forms the first sound outlet cavity, an end of the first hole portion that faces away from the first housing is in a blocked state, an end of the first hole portion that faces the first housing is in communication with the communication cavity, and the first sound outlet hole is provided on the frame.

Based on the second implementation of the first aspect, this application further provides a third implementation of the first aspect that is not claimed: the first hole portion is a blind hole. In this way, the end of the first hole portion that faces away from the first housing may be naturally in a blocked state, without the need for an additional blocking component, and a structure of the electronic device may be relatively simple. In addition, in the blind hole solution, the middle plate does not need to be penetrated, a digging volume of the middle plate may be relatively small, and opening of the first hole portion may also have less impact on a strength of the middle plate, thereby ensuring the overall strength of the middle frame to a greater extent.

Based on the second implementation of the first aspect, this application further provides a fourth implementation of the first aspect that is not claimed: the first hole portion is a through hole, the second housing further includes a blocking component, and the blocking component is configured to block the end of the first hole portion that faces away from the first housing.

Based on the fourth implementation of the first aspect, this application further provides a fifth implementation of the first aspect that is not claimed: the second housing further includes a screen, the screen is mounted on a side of the middle plate that faces away from the first housing, and the blocking component is the screen. The screen is a component of the electronic device. By using the screen as the blocking component, a quantity of components may be reduced, thereby simplifying the structure of the electronic device.

Based on the fourth implementation or the fifth implementation of the first aspect, this application further provides a sixth implementation of the first aspect that is not claimed: the first hole portion includes a first hole section and a second hole section that are in communication with each other, the first hole section is in communication with the communication cavity, an end of the second hole section away from the first housing is blocked by the blocking component, and the first hole section and the second hole section are not coaxial.

By using this solution, an opening area of the first hole portion on a surface of the middle plate that faces the first housing and an opening area of a surface that faces the screen may be smaller, which can reduce an inner space of the first hole portion, thereby further reducing the impact on the strength of the middle plate. In addition, since the opening area of the first hole portion on the surface of the middle plate that faces the first housing (that is, the opening area of the first hole section) may be smaller, correspondingly, a size of the second connecting end connected to the first hole section in the transverse direction of the electronic device may also be smaller, and a size of the speaker bracket in the transverse direction of the electronic device may also be reduced, thereby reducing the mounting space occupied by the speaker module in the transverse direction of the electronic device to a certain extent. In addition, for the first hole portion, the foregoing design only makes sizes of two end portions of the first hole portion in the thickness direction relatively small, a size of a middle region (a communication region between the first hole section and the second hole section) of the first hole portion in the thickness direction may still be great, and a size of a sound outlet region of the first sound outlet hole in the transverse direction of the electronic device is not affected substantially.

Based on the first implementation of the first aspect, this embodiment of this application further provides a seventh implementation of the first aspect: the second housing includes a middle frame, the middle frame includes a frame, and the frame is provided with the first sound outlet cavity and the first sound outlet hole.

Based on the seventh implementation of the first aspect, this embodiment of this application further provides an eighth implementation of the first aspect: the frame is provided with a first sealing end surface surrounding the first sound outlet cavity, the first sealing end surface is arranged at an angle with the thickness direction, the second connecting end has a second sealing end surface, and the first sealing end surface is sealingly assembled with the second sealing end surface. In this solution, the assembly of the first sealing end surface and the second sealing end surface is a bevel connection. An assembly process is relatively simple, and it is not easy to cause damage to a sealing portion between the two sealing end surfaces.

Based on the first implementation of the first aspect, this application further provides a ninth implementation of the first aspect that is not claimed: the second housing includes a middle frame, the middle frame includes a frame and a middle plate, the middle plate is provided with a second hole portion and a third hole portion that are in communication with each other, the first sound outlet cavity includes inner spaces of the second hole portion and the third hole portion, two axial ends of the second hole portion are in a blocked state, an end of the third hole portion that faces away from the first housing is in the blocked state, and an end of the third hole portion that faces the first housing is in communication with the communication cavity; and the first sound outlet hole is provided on the frame and is in communication with the second hole portion.

Based on the ninth implementation of the first aspect, this application further provides a tenth implementation of the first aspect that is not claimed: the second hole portion is a blind hole. In this way, the end of the second hole portion that faces the first housing may be naturally in the blocked state. There is no need to provide a special blocking component, which can reduce the quantity of components of the electronic device, simplify the structure of the electronic device, and can further reduce the impact on the strength of the middle plate; an opening end of the second hole portion faces away from the first housing, and the third hole portion is a through hole; and the second housing further includes a blocking component, and the blocking component is configured to block ends of the second hole portion and the third hole portion that face away from the first housing.

Based on the tenth implementation of the first aspect, this application further provides an eleventh implementation of the first aspect that is not claimed: the second housing further includes a screen, the screen is mounted on a side of the middle plate that faces away from the first housing, and the blocking component is the screen. The screen is a component of the electronic device. By using the screen as the blocking component, a quantity of components may be reduced, thereby simplifying the structure of the electronic device.

Based on the tenth implementation or the eleventh implementation of the first aspect, this application further provides a twelfth implementation of the first aspect that is not claimed: the second hole portion includes a third hole section and a fourth hole section that are in communication with each other, the third hole section is in communication with the first sound outlet hole, the fourth hole section is in communication with the third hole portion, and a size of the third hole section along the thickness direction is larger than that of the fourth hole section. In this arrangement, the fourth hole section may be set shallower, which can reduce the digging volume of the middle plate, thereby reducing the impact on the strength of the middle plate, so that the middle frame can have a relatively high structural strength.

Based on any one of the ninth implementation to the twelfth implementation of the first aspect, this application further provides a thirteenth implementation of the first aspect that is not claimed: orthographic projections of the second hole portion and the third hole portion on the middle plate do not extend on a same straight line. In this way, a position of the third hole portion can be easily adjusted, thereby adapting to the assembly of different electronic devices, especially in a situation in which an interfering component may exist. For example, in a mounting situation in which the speaker module and the camera module interfere, the foregoing solution can better achieve avoidance between the speaker module and the camera module in a mounting process.

A specific extending direction of the foregoing orthographic projection is not limited herein, and can be determined based on a specific structure of the electronic device in a practical application.

Based on the first aspect or based on any one of the first implementation to the thirteenth implementation of the first aspect, this embodiment of this application further provides a fourteenth implementation of the first aspect: the communication cavity includes a first sub-cavity, a second sub-cavity, and a third sub-cavity that are in communication in sequence; the first sub-cavity is connected to the first sound emitting portion and is configured to directly receive a vibrating sound of the first sound emitting portion; at least part of the second sub-cavity extends along the transverse direction of the electronic device to achieve a transverse extension design of the communication cavity; and the third sub-cavity may be in communication with the first sound outlet hole, so that the sound produced by the first sound emitting portion can be played through the first sound outlet hole.

In fact, the communication cavity may also be V-shaped as a whole. In this case, it can be considered that the communication cavity only includes two sub-cavities.

Based on the fourteenth implementation of the first aspect, this embodiment of this application further provides a fifteenth implementation of the first aspect: an area of a cross-section of the third sub-cavity perpendicular to an axial direction of the third sub-cavity is smaller than an area of a cross-section of the first sub-cavity perpendicular to an axial direction of the first sub-cavity. In this way, sizes of the speaker bracket in the transverse direction and the longitudinal direction of the electronic device may be relatively small, and the mounting space occupied by the speaker bracket may further be reduced. In addition, since the area of the cross-section perpendicular to the axial direction of the third sub-cavity is smaller, correspondingly, an opening of the first hole portion connected to the third sub-cavity may also be smaller, which can further reduce an opening area of the middle plate and reduce the impact of the opening on the strength of the middle plate, thereby ensuring the overall structural strength of the middle frame.

Based on the fourteenth implementation or the fifteenth implementation of the first aspect, this embodiment of this application further provides a sixteenth implementation of the first aspect: the speaker bracket includes a bottom plate portion and a frame portion that are separate, the frame portion is provided with a first through hole and a second through hole, the bottom plate portion is mounted on an axial end of the frame portion, the bottom plate portion and the frame portion enclose the first sub-cavity, the second sub-cavity, and the third sub-cavity, the first sub-cavity includes an inner space of the first through hole, and the third sub-cavity includes an inner space of the second through hole. The split design of the speaker bracket can facilitate formation of a communication cavity with a complex extending direction.

Based on the fourteenth implementation or the fifteenth implementation of the first aspect, this embodiment of this application further provides a seventeenth implementation of the first aspect: the speaker bracket is of an integrated structure, and inner wall surfaces of the first sub-cavity, the second sub-cavity, and the third sub-cavity are provided with an easy demoulding bevel to facilitate demolding, thereby facilitating the formation of the communication cavity with the complex extending direction.

Based on any one of the fourteenth implementation to the seventeenth implementation of the first aspect, this embodiment of this application further provides an eighteenth implementation of the first aspect: a projection of the second sub-cavity on the second housing along the thickness direction does not extend on a same straight line. In this arrangement, a position of the second connecting end can also be easily adjusted, thereby adapting to the assembly of different electronic devices, especially in a situation in which an interfering component may exist. For example, in a mounting situation in which the speaker module and the camera module interfere, the foregoing solution can better achieve avoidance between the speaker module and the camera module in a mounting process.

Based on the eighteenth implementation of the first aspect, this embodiment of this application further provides a nineteenth implementation of the first aspect: the second housing includes a middle frame, the middle frame includes a frame and a middle plate, the middle plate is provided with a camera hole, the camera hole is configured to be used with the camera module of the electronic device, and the first sub-cavity, the second sub-cavity, and the third sub-cavity are arranged surrounding the camera hole to avoid the camera module.

Based on any one of the fourteenth implementation to the nineteenth implementation of the first aspect, this embodiment of this application further provides a twentieth implementation of the first aspect: the first connecting end has a first sealing surface, a direction in which the first sound emitting portion and the second sound emitting portion are arranged opposite to each other is an axial direction of the speaker module, the first sealing surface is perpendicular to the axial direction of the speaker module, and the first sound emitting portion is sealingly mounted on the first sealing surface. In this case, a sealing form between the first sound emitting portion and the first sealing surface may be dispensing, gum, or a combination of dispensing and gum.

Based on the fourteenth implementation or the nineteenth implementation of the first aspect, this embodiment of this application further provides a twenty-first implementation of the first aspect: the first connecting end has a second sealing surface, a direction in which the first sound emitting portion and the second sound emitting portion are arranged opposite to each other is an axial direction of the speaker module, the second sealing surface and the axial direction of the speaker module are arranged at an angle, the angle is less than 90 degrees, and the first sound emitting portion is sealingly mounted on the second sealing surface. In this case, a sealing form between the first sound emitting portion and the second sealing surface may be gum.

The first sealing surface and the second sealing surface may be used selectively, or both may be arranged.

Based on the first aspect or based on any one of the first implementation to the twenty-first implementation of the first aspect, this embodiment of this application further provides a twenty-second implementation of the first aspect: the electronic device may further include a main board bracket; and the main board bracket may be press-connected to the speaker bracket toward the second housing to prevent the speaker bracket from lifting after mounting, which can improve the mounting reliability of the speaker bracket, thereby improving the mounting reliability of the speaker module; or the speaker bracket may also be mounted on the main board bracket; or the speaker bracket and the main board bracket may be of an integrated structure. In this way, a quantity of components may be reduced and the mounting process of the electronic device may be simplified.

Based on the first aspect or based on any one of the first implementation to the twenty-second implementation of the first aspect, this embodiment of this application further provides a twenty-third implementation of the first aspect: the second housing is further provided with a plurality of positioning plates for positioning and assembling the speaker module in the transverse direction and the longitudinal direction of the electronic device, which can improve the mounting reliability of the speaker module in the second housing.

Based on the first aspect or based on any one of the first implementation to the twenty-third implementation of the first aspect, this embodiment of this application further provides a twenty-fourth implementation of the first aspect: the second housing is provided with a second sound outlet cavity, the second sound outlet cavity is in communication with the second sound outlet hole, and the second sound outlet cavity is connected to the second sound emitting portion, so that the second sound emitting portion can emit a sound wave to the second sound outlet cavity. The second sound outlet cavity can form a buffer space between the communication cavity and the second sound outlet hole to guide the sound wave in the communication cavity to the second sound outlet hole for playback, which is beneficial to reducing eddy currents during sound wave transmission and reducing noise, thereby ensuring a better sound playback quality.

Based on the twenty-fourth implementation of the first aspect, this embodiment of this application further provides a twenty-fifth implementation of the first aspect: the second housing includes a middle frame and a screen, the middle frame includes a frame and a middle plate, the screen is mounted on a side of the middle plate that faces away from the first housing, the middle plate is provided with a fourth hole portion, and the second sound outlet cavity includes an inner space of the fourth hole portion; and the second sound outlet hole is provided on the frame, and/or the second sound outlet hole is provided between the frame and the screen.

Based on the twenty-fifth implementation of the first aspect, this embodiment of this application further provides a twenty-sixth implementation of the first aspect: a transition space is further provided between the screen and the middle frame, the transition space connects the second sound outlet hole to the fourth hole portion, the second sound outlet cavity includes the transition space, and the transition space is gradually expanded along a direction close to the second sound outlet hole, so that a size transition between a sound region of the second sound outlet hole and the fourth hole portion may be formed, which can better avoid sudden changes in size, thereby improving the sound playback quality.

Based on the first aspect or based on any one of the first implementation to the twenty-sixth implementation of the first aspect, this embodiment of this application further provides a twenty-seventh implementation of the first aspect: at least one of a connecting position between the speaker module and the first connecting end, a connecting position between the speaker module and the second housing, and a connecting position between the second connecting end and the second housing is provided with a dustproof net, so that anti-dust performance of the speaker module is improved.

Based on the first aspect or based on any one of the first implementation to the twenty-seventh implementation of the first aspect, this embodiment of this application further provides a twenty-eighth implementation of the first aspect: the speaker module is further configured with a closed rear cavity, which can reduce the impact on other structural components inside the electronic device.

Based on the first aspect or based on any one of the first implementation to the twenty-eighth implementation of the first aspect, this embodiment of this application further provides a twenty-ninth implementation of the first aspect: a main board is further included, the main board is connected to the speaker module through a signal, and the main board is configured to control the first sound emitting portion and the second sound emitting portion to emit sound waves in a same phase or in opposite phases.

During specific work, the main board may control the first sound emitting portion and the second sound emitting portion to emit the sound waves in opposite phases respectively to offset sound leakage, thereby improving the privacy of calls. In an external playback scenario, the first sound emitting portion and the second sound emitting portion may also emit the sound waves in the same phase to enhance a stereo effect.

According to a second aspect that is not claimed, an embodiment of this application provides an electronic device, and the electronic device may specifically be a mobile phone, a tablet computer, and the like. The electronic device includes a first housing, a second housing, a speaker module, and a speaker bracket. The speaker module and the speaker bracket are collectively referred to as a speaker assembly. The first housing and the second housing are connected to each other along a thickness direction of the electronic device, and can form an external structure of the electronic device. The second housing is further provided with a first sound outlet hole and a second sound outlet hole. The speaker module includes a first sound emitting portion and a second sound emitting portion, the first sound emitting portion faces the first housing, and the second sound emitting portion faces the second housing. The speaker bracket is provided with a communication cavity, and the speaker bracket has a first connecting end and a second connecting end. The first connecting end is sealingly assembled to the first sound emitting portion, so that the first sound emitting portion can emit a sound wave into the communication cavity. The second connecting end is sealingly assembled to the second housing along a first direction, so that the communication cavity is in communication with the first sound outlet hole. The second sound emitting portion is sealingly assembled to the second housing along a second direction, so that the second sound emitting portion can emit a sound wave into the second sound outlet hole. Sealing portions are provided between the second sound emitting portion and the second housing, and between the second connecting end and the second housing. The foregoing first direction is a longitudinal direction or a transverse direction of the electronic device, and the foregoing second direction is a thickness direction of the electronic device.

One of the speaker bracket and the second housing is provided with a guide portion, and the other is provided with a guide groove. Before the guide portion enters the guide groove, the guide portion may play a supporting role, which can reduce scratches on the sealing portion in an assembly process; after the guide portion enters the guide groove, the mounting between the speaker bracket and the second housing, and the mounting between the second sound emitting portion and the second housing may be guided; and in the assembly process of the speaker assembly, relatively little damage may be done to the sealing portion, which is beneficial to ensuring the reliability of the sealing.

Based on the second aspect, this embodiment of this application further provides a first implementation of the second aspect: the guide portion has a first guide surface, the first guide surface and the first direction form an angle of less than 90 degrees, the guide groove has a first matching surface, and extending directions of the first matching surface and the first guide surface are consistent. When the speaker assembly is assembled along the first direction, the first guide surface and the first matching surface may form a guide. After the assembly is completed, the first guide surface and the first matching surface may fit together.

Based on the second aspect, this embodiment of this application further provides a second implementation of the second aspect: the guide portion has a second guide surface, the second guide surface and the second direction form an angle of less than 90 degrees, the guide groove has a second matching surface, and extending directions of the second matching surface and the second guide surface are consistent. When the speaker assembly is assembled along the second direction, the second guide surface and the second matching surface may form a guide. After the assembly is completed, the second guide surface and the second matching surface may fit together.

Based on the second aspect, this embodiment of this application further provides a third implementation of the second aspect: a quantity of guide portions may be multiple, and correspondingly, a quantity of guide grooves may also be multiple, and the guide portions and the guide grooves may be assembled in one-to-one correspondence.

### BRIEF DESCRIPTION OF DRAWINGS

FIG. 1 is a schematic diagram of a structure of an electronic device according to this application;
FIG. 2 is a schematic exploded diagram of the electronic device shown in FIG. 1;
FIG. 3 is a cross-sectional view of a first embodiment of the electronic device shown in FIG. 1 in a P-P direction;
FIG. 4 is a front view of a partial structure of FIG. 3;
FIG. 5 is a cross-sectional view of a first embodiment of the electronic device shown in FIG. 1 in a Q-Q direction;
FIG. 6 is a schematic diagram of a structure of another mounting method of a second sealing portion;
FIG. 7 is a schematic diagram of a structure of a modification solution of a first hole portion shown in FIG. 4;
FIG. 8 is a schematic diagram of a structure of another modification solution of a first hole portion shown in FIG. 4;
FIG. 9 is a schematic diagram of a partial structure of a side of a middle frame that faces a first housing shown in FIG. 4;
FIG. 10 is a schematic diagram of a partial structure of a side of a middle frame that faces away from a first housing shown in FIG. 4;
FIG. 11 is a schematic diagram of a structure of a specific implementation of a second sound outlet hole;
FIG. 12 is a schematic diagram of a structure of another specific implementation of a second sound outlet hole;
FIG. 13 is a schematic diagram of a structure of an implementation of a speaker bracket;
FIG. 14 is a cross-sectional view of FIG. 13;
FIG. 15 is a cross-sectional view of a modification solution of the speaker bracket shown in FIG. 13;
FIG. 16 is a cross-sectional view of another modification solution of the speaker bracket shown in FIG. 13;
FIG. 17 is a cross-sectional view of still another modification solution of the speaker bracket shown in FIG. 13;
FIG. 18 is a diagram of a mounting structure of a middle frame and a speaker module in a second embodiment of the electronic device shown in FIG. 1;
FIG. 19 is a cross-sectional view of the middle frame and the speaker module shown in FIG. 18 after being configured with a speaker bracket;
FIG. 20 is a cross-sectional view of the speaker bracket shown in FIG. 19 perpendicular to a Z-axis direction;
FIG. 21 is a diagram of a partial structure of a side of a middle frame facing away from a first housing in a third embodiment of the electronic device shown in FIG. 1;
FIG. 22 is a schematic diagram of a structure of orthographic projections of a second hole portion and a third hole portion shown in FIG. 21 on the middle plate;
FIG. 23 is a cross-sectional view of the second hole portion and the third hole portion shown in FIG. 22 on a line R;
FIG. 24 is a diagram of a partial structure of a side of a middle frame facing a first housing in a fourth embodiment of the electronic device shown in FIG. 1;
FIG. 25 is a diagram of a connecting structure between a first sealing end surface of the middle frame shown in FIG. 24 and a speaker bracket;
FIG. 26 is a schematic diagram of a structure of a speaker module;
FIG. 27 is a cross-sectional view of a fifth embodiment of the electronic device shown in FIG. 1 in a Q-Q direction;
FIG. 28 is a front view of a partial structure in FIG. 27;
FIG. 29 is a diagram of a mounting structure of a speaker bracket and a middle frame in the electronic device shown in FIG. 27; and
FIG. 30 is a schematic diagram of a structure of a modification solution of FIG. 29.

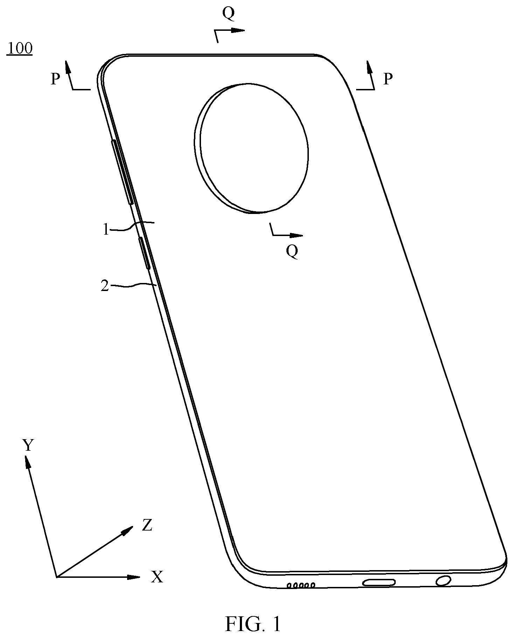

### List of reference numerals in FIG. 1 to FIG. 30:

100: electronic device;
1: first housing; 11: cover body; 12: camera decorative member;
2: second housing; 21: middle frame; 211: frame; 211a: socket; 211b: first sealing end surface 212. middle plate; 212a: mounting slot; 212b: transition slot; 212c: camera hole; 212d: positioning plate; 212f: screen gum; 212g: bump; 22: screen; 221: light-transmissive cover plate; 222: panel; 23: guide groove; 231: first matching surface; 232: second matching surface; 2a: first sound outlet cavity; 2b: second sound outlet cavity; 2c: first sound outlet hole; 2d: second sound outlet hole;
3: main circuit board; 31: main board bracket;
4: auxiliary circuit board;
5: connecting structure;
6: battery;
7: USB device;
8: speaker module; 81: first sound emitting portion; 82: second sound emitting portion; 83: dustproof net;
9: speaker bracket; 9a: communication cavity; 9a-1: first sub-cavity; 9a-2: second sub-cavity; 9a-3: third sub-cavity; 9a-4: easy demoulding bevel; 91: bottom plate portion; 92: frame portion; 921: first through hole; 922: second through hole; 93: first sealing surface; 94: second sealing surface; 95: second sealing end surface; 96: guide portion; 961: first guide surface; 962: second guide surface;
A1: first hole portion; A11: first hole section; A12: second hole section; A2: second hole portion; A21: third hole section; A22: fourth hole section; A3: third hole portion;
B1: fourth hole portion;
C1: first sealing portion; C2: second sealing portion; C3: third sealing portion; and C4: fourth sealing portion.

### DESCRIPTION OF EMBODIMENTS

To enable those skilled in the art to better understand technical solutions of this application, this application will be further described in detail below with reference to accompanying drawings and specific embodiments.

In embodiments of this application, the terms "first", "second", "third", and "fourth" are used merely for the purpose of description, and shall not be construed as indicating or implying relative importance or implying a quantity of indicated technical features. Therefore, features defined by "first", "second", "third", and "fourth" may explicitly or implicitly include one or more such features.

In descriptions of embodiments of this application, it should be noted that unless otherwise specified and defined, the terms "mounting", and "connection" shall be understood in a broad sense. For example, the "connection" may be a detachable or non-removable connection, or may be a direct connection or an indirect connection through an intermediate. A "fixed connection" means that they are connected with each other and that a relative position relationship after the connection remains unchanged. A "rotating connection" means that they are connected with each other and capable of relatively rotating when connected. A "sliding connection" means that they are connected with each other and capable of relatively sliding when connected.

The orientation terms mentioned in embodiments of this application, for example, "inside", "outside", "upper", and "lower" are merely directions in which reference is made to the accompanying drawings. Therefore, the orientation terms used are intended to better and more clearly describe and understand embodiments of this application, instead of indicating or implying that the apparatus or element must have a specific orientation, be constructed in a specific orientation, and operate in a specific orientation. Therefore, the orientation terms used cannot be construed as a limitation on embodiments of this application. In addition, unless otherwise specified in this application, "a plurality of" mentioned in this application means two or more.

In descriptions of embodiments of this application, terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Without more limitations, elements defined by the sentence "including a/an ..." does not exclude that there are still other same elements in the processes, methods, objects, or apparatuses.

The term "and/or" in embodiments of this application is only an association relationship for describing associated objects and represents that three relationships may exist. For example, A and/or B may represent the following three cases: A exists alone, A and B exist simultaneously, and B exists alone. In addition, the character "/" in this specification generally indicates an "or" relationship between the associated objects.

In embodiments of this application, descriptions such as "several", "a plurality of", and the like related to a quantity do not necessarily indicate a specific quantity of the relevant components. In addition, when "several", "a plurality of", and the like are used to express a quantity of specific components, it does not indicate a relationship between the quantities of these components. The quantities of these components may be the same or different.

Embodiments of this application relate to an electronic device. The electronic device may include a handheld device, an in-vehicle device, a wearable device, a computing device, or other processing devices connected to a wireless modem. The electronic device may further include a cellular phone (cellular phone), a smart phone (smart phone), a personal digital assistant (personal digital assistant, PDA) computer, a tablet computer, a portable computer, a laptop computer (laptop computer), a camcorder, a video recorder, a camera, a smart watch (smart watch), a smart wristband (smart wristband), an augmented reality (augmented reality, AR) device, a virtual reality (virtual reality, VR) device, an in-vehicle computer, or another electronic device with a sound playback function. A specific form of the electronic device is not specially limited in embodiments of this application. For ease of understanding, the following uses an example in which the electronic device is a mobile phone for description.

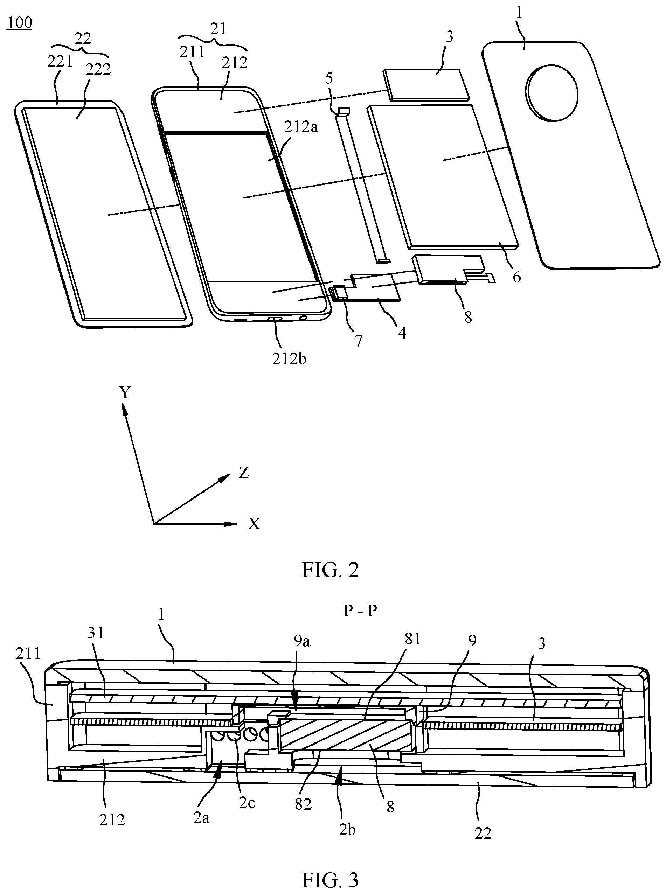

Refer to FIG. 1 and FIG. 2. FIG. 1 is a schematic diagram of a structure of an electronic device according to this application, and FIG. 2 is a schematic exploded diagram of the electronic device shown in FIG. 1.

As shown in FIG. 1 and FIG. 2, in this embodiment of this application, the electronic device 100 may be a mobile phone. Specifically, an electronic device 100 may include a first housing 1, a second housing 2, a main circuit board 3, an auxiliary circuit board 4, a connecting structure 5, a battery 6, a USB device 7, and a speaker module 8.

It should be noted that FIG. 1, FIG. 2, and the following related other relevant accompanying drawings only schematically show some components included in the electronic device 100, and actual shapes, actual sizes, actual positions, and actual structures of the components are not defined by FIG. 1, FIG. 2, and the following accompanying drawings. In some other embodiments of this application, the electronic device 100 may include more or fewer components than those shown in the figure, or some components may be combined, or some components may be split, or components are arranged in different manners. The components in the figure may be implemented by hardware, software, or a combination of software and hardware.

In the embodiment shown in FIG. 1 and FIG. 2, the electronic device 100 is in a shape of a rectangular flat plate. To facilitate descriptions of the following embodiments, an XYZ coordinate system is established. Specifically, a width direction of the electronic device 100 is defined as an X-axis direction, a length direction of the electronic device 100 is defined as a Y-axis direction, a thickness direction of the electronic device 100 is defined as a Z-axis direction, and the X-axis direction, the Y-axis direction, and the Z-axis direction are perpendicular to each other. In some embodiments, the X-axis direction may also be referred to as a transverse direction of the electronic device 100, the Y-axis direction may also be referred to as a longitudinal direction of the electronic device 100, and the Z-axis direction may also be referred to as a normal direction of the electronic device 100. It may be understood that a coordinate system of the electronic device 100 may be flexibly set according to actual requirements. This is not specifically limited herein. In some other embodiments, the shape of the electronic device 100 may also be a square flat plate, a rhombic flat plate, a circular flat plate, an elliptical flat plate, an oblong flat plate, a triangular flat plate, a special-shaped flat plate, or the like.

The first housing 1 and the second housing 2 may be connected along the Z-axis direction to form an appearance structure of the electronic device 100. In some embodiments, the second housing 2 further includes a middle frame 21 and a screen 22, and the screen 22 is mounted on a side of the middle frame 21 that faces away from the screen 22. Certainly, in some other embodiments, the screen 22 may not exist.

The screen 22 is configured to display an image, a video, and the like. Refer to FIG. 2. The screen 22 includes a light-transmitting cover plate 221 and a panel 222 (panel, also referred to as a display panel). The light-transmitting cover plate 221 and the panel 222 may be stacked in the Z-axis direction. Specifically, the light-transmitting cover plate 221 and the panel 222 may be fixedly connected through gluing or another method. The light-transmitting cover plate 221 is mainly configured to protect the panel 222 and prevent dust. A material of the light-transmitting cover plate 221 includes but is not limited to glass, ceramics, and plastic.

A flexible panel or a rigid panel may be used as the panel 222. For example, the panel 222 may be an organic light-emitting diode (organic light-emitting diode, OLED) panel, an active-matrix organic light-emitting diode (active-matrix organic light-emitting diode, AMOLED) panel, a mini light-emitting diode (mini organic light-emitting diode) panel, a micro light-emitting diode (micro organic light-emitting diode) panel, a micro organic light-emitting diode (micro organic light-emitting diode) panel, a quantum dot light-emitting diode (quantum dot light emitting diodes, QLED) panel, a liquid crystal display (liquid crystal display, LCD), or the like.

Still refer to FIG. 1 and FIG. 2. The first housing 1 may be located on a side of the middle frame 21 away from the screen 22. The first housing 1, the middle frame 21, and the screen 22 may be stacked in the Z-axis direction. Both the screen 22 and the first housing 1 may be mounted on the middle frame 21. For example, the first housing 1 may be fixedly connected to the middle frame 21 through gluing, snapping, welding, screwing, riveting, or another method; and the screen 22 may be fixedly connected to the middle frame 21 through dispensing, gum, or another connection method. A material of the first housing 1 includes but is not limited to metal, ceramics, plastic, or glass. To make the electronic device 100 thinner and lighter while ensuring structural strength of the first housing 1, the material of the first housing 1 may be selected as metal. A material of the middle frame 21 includes but is not limited to metal, ceramics, plastic, or glass. The material of the middle frame 21 and the material of the first housing 1 may be the same or different.

In some embodiments, the light-transmitting cover plate 221 may be fixed to the middle frame 21. Specifically, the light-transmitting cover plate 221 may be fixed on the middle frame 21 through gluing. The light-transmitting cover plate 221, the first housing 1, and the middle frame 21 enclose an inner accommodating cavity of the electronic device 100. The inner accommodating space accommodates the panel 222, the main circuit board 3, the auxiliary circuit board 4, the connecting structure 5, the battery 6, and the speaker module 8.

In the Z-axis direction, a side on which the screen 22 is located is a front side of the electronic device 100, and a side on which the first housing 1 arranged opposite to the screen 22 is located may be a rear side of the electronic device 100. In this way, the first housing 1 may also be referred to as a rear cover. In some embodiments, the first housing 1 may include a cover body 11 and a camera decorative member 12. The cover body 11 forms a main structure of the first housing 1, and the cover body 11 may be provided with a decorative hole (not shown in the figure). The camera decorative member 12 may be mounted in the decorative hole, and can partially extend out of the decorative hole to form a protruding part on a surface of the cover body 11, which may decorate the camera module configured in the electronic device 100 and have a protective function.

A structural form of the camera decorative member 12 is not limited herein. In some embodiments, a cross-section of the camera decorative member 12 perpendicular to the Z-axis direction may be substantially circular. For this embodiment, refer to FIG. 1 and FIG. 2. In some other embodiments, the cross-section of the camera decorative member 12 perpendicular to the Z-axis direction may also be in a regular shape such as an ellipse, a rectangle, a rhombus, a square, or a triangle; or another irregular shape.

The camera decorative member 12 may be located at a middle position of the first housing 1 in the X-axis direction, or may be located at an edge position of the first housing 1 in the X-axis direction. The camera decorative member 12 may be located at a middle position of the first housing 1 in the Y-axis direction, or may be located at an edge position of the first housing 1 in the Y-axis direction. In fact, there is a correlation between a mounting position of the camera decorative member 12 and a mounting position of the camera module.

Embodiments of this application do not limit a mounting method of the camera decorative member 12 and the cover body 11. In a specific implementation, those skilled in the art may make selections according to actual requirements, as long as reliability of the mounting can be ensured. For example, the camera decorative member 12 and the cover body 11 may be fixed through screwing, riveting, clamping, welding, interference fit, bonding, or another connection method.

Certainly, the camera decorative member 12 and the cover body 11 may also be formed into an integrated structure.

The main circuit board 3 integrates a main control chip. In some embodiments, the main circuit board 3 is also referred to as a main board. The main circuit board 3 may be fixed on a surface of the middle frame 21 close to the first housing 1. For example, the main circuit board 3 may be fixed to the middle frame 21 through threaded connection, clamping, gluing, welding, or another method. In some embodiments, as shown in FIG. 2, the middle frame 21 may include a frame 211 and a middle plate 212, and the middle plate 212 may be located on an inner side of the frame 211. The frame 211 and the middle plate 212 may be formed into an integrated structure; or the frame 211 and the middle plate 212 may alternatively be manufactured separately, and then assembled through welding, threading, snapping, gluing, or another method. A material of the middle plate 212 includes but is not limited to metal, ceramics, plastic, or glass. The material of the middle plate 212 and the material of the first housing 1 may be the same or different. The main circuit board 3 may be fixed on a surface of a side of the middle plate 212 that faces the first housing 1 through threaded connection, clamping, welding, or another method.

The main control chip may be, for example, an application processor (application processor, AP), a double data rate (double data rate, DDR) synchronous dynamic random access memory, or a universal flash storage (universal flash storage, UFS). In some embodiments, the main circuit board 3 is electrically connected to the screen 22, and the main circuit board 3 is configured to control the screen 22 to display an image or a video.

The main circuit board 3 may be a rigid circuit board, a flexible printed circuit board, or a rigid-flex circuit board. The main circuit board 3 may be an FR-4 dielectric board, a Rogers (Rogers) dielectric board, a mixed media board of FR-4 and Rogers, or the like. FR-4 herein is a mark of a flame-resistant material grade, and the Rogers dielectric board is a high-frequency board.

The auxiliary circuit board 4 is fixed in the inner accommodating cavity of the electronic device 100. The auxiliary circuit board 4 and the main circuit board 3 are arranged in the Y-axis direction. The auxiliary circuit board 4 may be fixed on the surface of the middle plate 212 that faces the first housing 1. Specifically, the auxiliary circuit board 4 may be fixed on the surface of the middle plate 212 that faces the first housing 1 through threaded connection, clamping, gluing, welding, or another method. The auxiliary circuit board 4 may be a rigid circuit board, a flexible printed circuit board, or a rigid-flex circuit board. The auxiliary circuit board 4 may be an FR-4 dielectric board, a Rogers (Rogers) dielectric board, a mixed media board of FR-4 and Rogers, or the like.

The auxiliary circuit board 4 is electrically connected to the main circuit board 3 through the connecting structure 5 to achieve data and signal transmission between the auxiliary circuit board 4 and the main circuit board 3. The connecting structure 5 may be a flexible printed circuit (flexible printed circuit, FPC). In another embodiment, the connecting structure 5 may alternatively be a conducting wire or an enameled wire.

A universal serial bus (universal serial bus, USB) device 70 is integrated on the auxiliary circuit board 4. The USB device 7 may be a USB type-C interface device, a USB type-A interface device, a USB type Micro-B interface device, or a USB type-B interface device.

A socket 211a is provided at a position that is on the frame 211 and corresponds to the USB device 7. Accessories such as a charger, a headset, and a data line can be electrically connected to the USB device 7 through the socket 211a to transmit power, signals, and data.

The battery 6 is fixed in the inner accommodating cavity of the electronic device 100. The battery 6 is located between the main circuit board 3 and the auxiliary circuit board 4. The battery 6 is configured to supply power to the main circuit board 3, the auxiliary circuit board 4, the screen 22, the speaker module 8, and the like. In some embodiments, the surface of the middle plate 212 that faces the first housing 1 is provided with a mounting slot 212a, and the battery 6 is mounted in the mounting slot 212a.

The battery 6 includes but is not limited to, a nickel-cadmium battery, a nickel-metal hydride battery, a lithium battery, or another types of battery that includes bare cells. In addition, there may be one or more batteries 6 in embodiments of this application, and a specific quantity and arrangement of batteries 6 in embodiments of this application may be set according to actual requirements.

The speaker module 8 is configured to restore an audio electrical signal such as music and speech into a sound, so that the electronic device 100 can support audio external playback. In some embodiments, the speaker module 8 is electrically connected to the auxiliary circuit board 4. Specifically, the speaker module 8 may be electrically connected to the auxiliary circuit board 4 through an electrical connecting member. The electrical connecting member may be a flexible printed circuit (flexible printed circuit, FPC), a conducting wire, an enameled wire, an elastic piece, a board to board (board to board, BTB) connector, or the like. With reference to FIG. 2, in this embodiment, the speaker module 8 may be located at a lower end of the electronic device 100. In some other embodiments, the speaker module 8 may also be directly electrically connected to the main circuit board 3 through the electrical connecting member such as an FPC, a conducting wire, an enameled wire, an elastic piece, or a BTB connector. In this case, the speaker module 8 may be located on an upper end of the electronic device.

In a conventional solution, the speaker module is configured with a speaker bracket, the speaker bracket is configured with a sound outlet channel extending along the Y-axis direction, the frame of the middle frame is provided with a sound outlet hole, and the speaker bracket is connected to the frame along the Y-axis direction, so that the sound outlet channel is in communication with the sound outlet hole. In addition, in the Y-axis direction, a sealing member is further provided between the speaker bracket and the frame to achieve sealing. In this solution, the sound outlet channel of the speaker module is equivalent to being arranged in the Y-axis direction. After the speaker module is assembled, the speaker module occupies a large space in the Y-axis direction, which makes it impossible to mount the speaker module in some types of electronic devices 100.

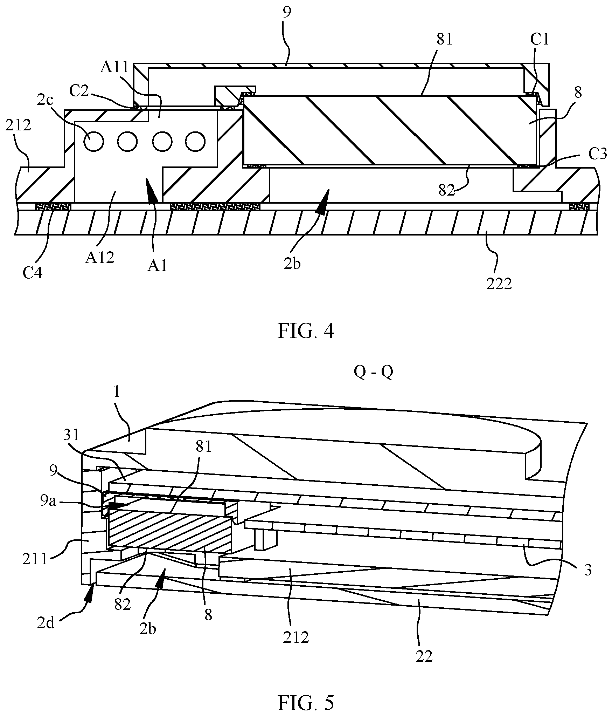

Refer to FIG. 3 to FIG. 5. FIG. 3 is a cross-sectional view of a first embodiment of the electronic device shown in FIG. 1 in a P-P direction, FIG. 4 is a front view of a partial structure of FIG. 3, and FIG. 5 is a cross-sectional view of a first embodiment of the electronic device shown in FIG. 1 in a Q-Q direction.

As shown in FIG. 3 to FIG. 5, the second housing 2 is provided with a first sound outlet cavity 2a and a second sound outlet cavity 2b that are separate from each other, and the first sound outlet cavity 2a and the second sound outlet cavity 2b are spaced apart in the X-axis direction. The second housing 2 is further provided with a first sound outlet hole 2c and a second sound outlet hole 2d. The first sound outlet hole 2c is in communication with the first sound outlet cavity 2a, and the second sound outlet hole 2d is in communication with the second sound outlet cavity 2b. The speaker module 8 includes a first sound emitting portion 81 and a second sound emitting portion 82. The first sound emitting portion 81 faces the first housing 1, and the second sound emitting portion 82 faces the screen 22. A direction in which the first sound emitting portion 81 and the second sound emitting portion 82 are arranged opposite to each other is an axial direction of the speaker module 8. The axial direction may be parallel to the Z-axis direction, or may form an angle less than 90 degrees with the Z-axis direction, that is, the speaker module 8 may be arranged at a certain angle relative to the Z-axis direction. In embodiments of the accompanying drawings, the axial direction of the speaker module 8 may be parallel to the Z-axis direction, to reduce a mounting space occupied by the speaker module 8 in the Z-axis direction. The first sound emitting portion 81 and the second sound emitting portion 82 may specifically be diaphragms, and both may vibrate and produce sounds. A specific mechanism of vibrating and producing sounds will not be described in detail herein.

The speaker bracket 9 is provided with a communication cavity 9a. At least part of the communication cavity 9a extends along the X-axis direction. The speaker bracket 9 has a first connecting end and a second connecting end. The first connecting end and the second connecting end may be spaced apart in the X-axis direction, and the first connecting end is sealingly assembled to the first sound emitting portion 81, so that the first sound emitting portion 81 can emit a sound wave into the communication cavity 9a. The second connecting end is sealingly assembled to the second housing 2, so that the communication cavity 9a and the first sound outlet cavity 2a are in sealed communication. The "sealed communication" herein means that the communication cavity 9a may be in communication with the first sound outlet cavity 2a, and a communication position between the communication cavity 9a and the first sound outlet cavity 2a forms a circumferential sealing, which can avoid sound leakage. The sound wave entering the communication cavity 9a may enter the first sound outlet cavity 2a again, and then be propagated out through the first sound outlet hole 2c. The second sound emitting portion 82 is sealingly assembled to the second housing 2, the second sound emitting portion 82 can emit a sound wave into the second sound outlet cavity 2b, and the sound wave entering the second sound outlet cavity 2b may be propagated out through the second sound outlet hole 2d.

Different from conventional designs, in embodiments of this application, the first sound outlet cavity 2a and the second sound outlet cavity 2b are spaced apart in the X-axis direction of the electronic device 100. The speaker module 8 and the second housing 2 are arranged in the Z-axis direction, and the second sound emitting portion 82 may be connected to the second sound outlet cavity 2b. In this way, the speaker module 8 and the second sound outlet cavity 2b are substantially at a same position in the X-axis direction. Then, the speaker module 8 and the first sound outlet cavity 2a are also spaced apart in the X-axis direction, so that the first sound emitting portion 81 and the first sound outlet cavity 2a are spaced apart in the X-axis direction. At least part of the communication cavity 9a may extend in the X-axis direction to have a first connecting end and a second connecting end that are spaced apart in the X-axis direction, so that the first sound emitting portion 81 and the first sound outlet cavity 2a that are spaced apart in the X-axis direction can be connected. The first sound outlet cavity 2a and the communication cavity 9a combine to form a front cavity of the first sound emitting portion 81, which is hereinafter referred to as a first front cavity; and the second sound outlet cavity 2b forms a front cavity of the second sound emitting portion 82, which is hereinafter referred to as a second front cavity. In this embodiment of this application, the first front cavity substantially extends in the X-axis direction, and the second front cavity is located on a side of the speaker module 8 in the Z-axis direction. This layout arrangement can reduce a space occupied in the Y-axis direction of the electronic device 100 and can better reduce the mounting space occupied by the speaker module 8 in the Y-axis direction, thereby adapting to mounting of more types of models.

Specifically, with reference to FIG. 4, a first sealing portion C1 may be provided between the first sound emitting portion 81 and the first connecting end to achieve sealing between the first sound emitting portion 81 and the first connecting end of the speaker bracket 9, to avoid sound leakage. The frame 211 of the second housing 2 is provided with a first sound outlet hole 2c, the middle plate 212 of the second housing 2 is provided with a first hole portion A1, and the first sound outlet cavity 2a includes an inner space of the first hole portion A1. An end of the first hole portion A1 that faces away from the first housing 1 may be in a blocked state, and an end of the first hole portion A1 that faces the first housing 1 may be in communication with the communication cavity 9a. In addition, a second sealing portion C2 may be provided between the second connecting end of the speaker bracket 9 and the middle plate 212 to ensure sealing performance at a joint position between the first hole portion A1 and the communication cavity 9a. A third sealing portion C3 is further provided between the second sound emitting portion 82 and the middle plate 212 to achieve sealing performance at a joint position between the second sound emitting portion 82 and the second sound outlet cavity 2b, so that the second sound emitting portion 82 may directly emit a sound wave into the second sound outlet cavity 2b, and the sound leakage can be better avoided. In the foregoing solution, the first sealing portion C1, the second sealing portion C2, and the third sealing portion C3 are substantially arranged in the Z-axis direction, which can also reduce the space occupied in the Y-axis direction.

Embodiments of this application do not limit the types of the first sealing portion C1, the second sealing portion C2, and the third sealing portion C3. In a specific implementation, those skilled in the art can refer to relevant technologies to determine as long as a sealing effect can be guaranteed. For example, these sealing portions may use sealing rings made of rubber, foam, or the like. In this case, the sealing portions do not have a function of connecting two adjacent components, and the two adjacent components may further be connected through snapping, screwing, riveting, or another connection method. Alternatively, these sealing portions may further be sealant. In this case, the sealing portions may further realize connection between two adjacent components. The two adjacent components no longer need to be provided with threaded holes, snapping structures, riveting structures, or other structures. The structural forms of the adjacent two components may be relatively simple.

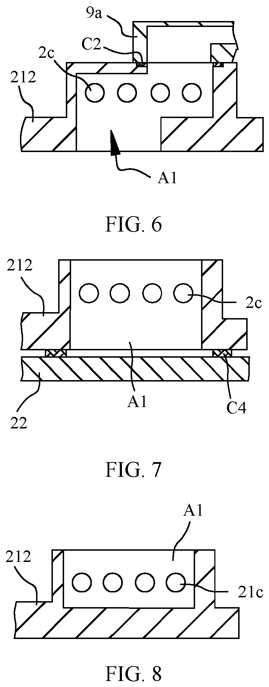

Refer to FIG. 6. FIG. 6 is a schematic diagram of a structure of another mounting method of a second sealing portion.

In addition, embodiments of this application do not limit an arrangement position of each sealing portion as long as a corresponding sealing effect can be achieved. Using the second sealing portion C2 as an example, in some embodiments, as shown in FIG. 4, the second sealing portion C2 may be arranged on a periphery of the first hole portion A1 and the communication cavity 9a, and can surround a hole opening of the first hole portion A1 that faces the speaker bracket 9 and a cavity opening of the communication cavity 9a located at the second connecting end. In some other embodiments, as shown in FIG. 6, the second sealing portion C2 may further be arranged in the first hole portion A1. Certainly, in some other embodiments, the second sealing portion C2 may also be arranged in the communication cavity 9a, or in both the first hole portion A1 and the communication cavity 9a. In this way, inner spaces of the first hole portion A1 and the communication cavity 9a may further be used to mount the second sealing portion C2, and the mounting space occupied by the speaker module 8 in the Z-axis direction may further be reduced.

Still refer to FIG. 4. In the implementation of FIG. 4, the first hole portion A1 includes a first hole section A11 and a second hole section A12 that are in communication with each other, the first hole section A11 is in communication with the communication cavity 9a, an end of the second hole section A12 away from the first housing 1 is blocked by a blocking component, and the first hole section A11 and the second hole section A12 are not coaxial.

In this arrangement, both an opening area of the first hole portion A1 on the surface of the middle plate 212 that faces the first housing 1 and an opening area on a surface that faces the screen 22 may be smaller, which can reduce the inner space of the first hole portion A1, thereby further reducing the impact on strength of the middle plate 212. In addition, since the opening area of the first hole portion A1 on the surface of the middle plate 212 that faces the first housing 1 (that is, an opening area of the first hole section A11) may be smaller, correspondingly, a size of the second connecting end connected to the first hole section A11 in the X-axis direction may also be smaller, and a size of the speaker bracket 9 in the X-axis direction may also be reduced, thereby reducing the mounting space occupied by the speaker module 8 in the X-axis direction to a certain extent. In addition, for the first hole portion A1, the foregoing design only makes sizes of two end portions of the first hole portion A1 in the Z-axis direction small, a size of a middle region (a communication region between the first hole section A11 and the second hole section A12) of the first hole portion A1 in the Z-axis direction may still be large, and a size of a sound outlet region of the first sound outlet hole 2c in the X-axis direction is not affected substantially.

In specific practice, computer numerical control (Computer numerical control, CNC) may be used to process the foregoing first hole portion A1, where the first hole section A11 may be processed on the side of the middle plate 212 that faces the first housing 1, and the second hole section A12 may be processed on the side of the middle plate 212 that faces the screen 22 to obtain the first hole section A11 and the second hole section A12 respectively.

Refer to FIG. 7. FIG. 7 is a schematic diagram of a structure of a modification solution of a first hole portion shown in FIG. 4.

In fact, the first hole portion A1 may also not use the section design solution shown in FIG. 4 and FIG. 6. As shown in FIG. 7, the first hole portion A1 may also be a hole portion extending along a same axis. In this case, the CNC only needs to perform process on the side of the middle plate 212, and the processing process may be relatively simple.

In implementations of FIG. 4, FIG. 6, and FIG. 7, the first hole portion A1 is a through hole, that is, the first hole portion A1 may run through the middle plate 212. In this case, the end of the first hole portion A1 that faces away from the first housing 1 needs to be blocked by the blocking component to ensure the sealing of the first sound outlet cavity 2a. In the implementations of these figures, the blocking component may be the screen 22. The screen 22 may be mounted on the side of the middle plate 212 that faces away from the first housing 1 and sealed by a fourth sealing portion C4 to prevent sound from leaking from a gap between the screen 22 and the middle plate 212. For a structural form of the fourth sealing portion C4, refer to the foregoing descriptions of the first sealing portion C1 to the third sealing portion C3, and repeated descriptions are not made herein again. For example, the fourth sealing portion C4 may be an adhesive in the form of dispensing or gum, to connect the middle plate 212 and the screen 22 while achieving sealing performance, thereby simplifying the connecting structure between the middle plate 212 and the screen 22.

In addition to the foregoing solution in which the screen 22 is used as the blocking component, other structural forms of blocking components may also be used, such as a blocking plate, and a sealing packing. These blocking components may be arranged on an outer side of the first hole portion A1 (the surface of the middle plate 212 that faces away from the first housing 1), or may be arranged inside the first hole portion A1.

Refer to FIG. 8. FIG. 8 is a schematic diagram of a structure of another modification solution of a first hole portion shown in FIG. 4.

In fact, the first hole portion A1 may further be a blind hole. As shown in FIG. 8, the first hole portion A1 may not run through the middle plate 212, the end of the first hole portion A1 that faces away from the first housing 1 may be a closed end, and the end of the first hole portion A1 that faces the first housing 1 may be an open end for being in communication with the communication cavity 9a. Using this solution, since the first hole portion A1 does not run through the middle plate 212, the impact of the arrangement of the first hole portion A1 on the strength of the middle plate 212 may be relatively small, so that the middle frame 21 may have a relatively high structural strength. When preparing, the CNC only needs to process the side of the middle plate 212, and the processing process may be relatively simple. In addition, the design of the blind hole allows the end of the first hole portion A1 that faces away from the first housing 1 to be naturally blocked, and the blocking component may further be omitted.

A central axis of the first hole portion A1 may be parallel to the Z-axis direction, or may form a specific angle with the Z-axis direction.

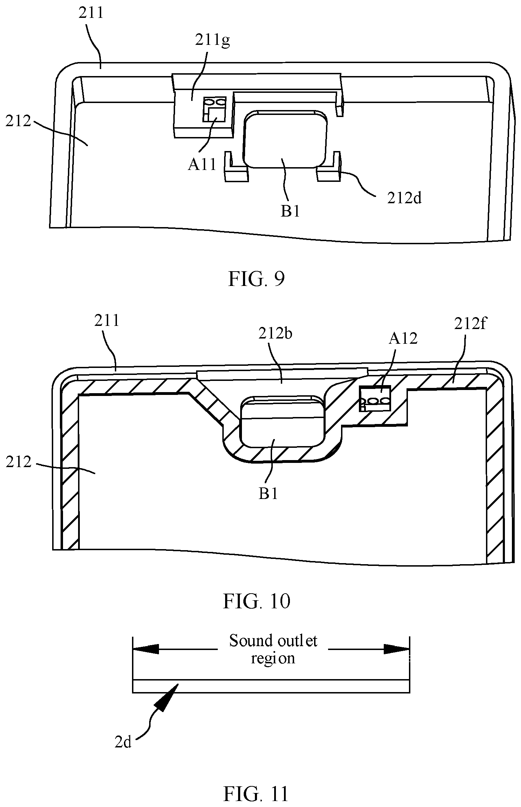

Refer to FIG. 9 and FIG. 10. FIG. 9 is a schematic diagram of a partial structure of a side of a middle frame that faces away from a first housing shown in FIG. 4, and FIG. 10 is a schematic diagram of a partial structure of a side of a middle frame that faces a first housing shown in FIG. 4.

As shown in FIG. 9, a bump 212g is arranged on the side of the middle plate 212 that faces the first housing 1. The bump 212g is configured to process the foregoing first hole portion A1 and to form the first sound outlet cavity 2a. Using this solution, a size of the remaining region of the middle plate 212 except for the position at which the bump 212g is arranged may be smaller in the Z-axis direction, which is beneficial to the lightweight design of the middle plate 212. For the structural form of the first hole portion A1, reference may be made to the relevant descriptions in the foregoing embodiments. Using the first hole portion A1 shown in FIG. 4 as an example, the first hole section A11 may be formed on the bump.

The side of the middle plate 212 that faces the first housing 1 may further be provided with a positioning plate 212d for positioning and assembling the speaker module 8 on the middle plate 212, which may improve the reliability of positioning and assembling the middle plate 212.

The structural form of the positioning plate 212d is not limited herein. In a specific implementation, those skilled in the art may design the positioning plate 212d in combination with the structural form of the speaker module 8. In some implementations, an orthographic projection of the speaker module 8 on the middle plate 212 may appear as a rectangle. In this case, the positioning plate 212d may be roughly an L-shaped plate, refer to FIG. 9 for details, and is configured to position a corner portion of the speaker module 8. Certainly, the positioning plate 212d may alternatively be a straight plate for positioning four side portions of the speaker module 8. In some other implementations, the orthographic projection of the speaker module 8 on the middle plate 212 may alternatively be in the shape of a circle, a triangle, or other irregular shapes. Accordingly, the structural form of the positioning plate 212d may also change to ensure reliable positioning of the speaker module 8.

The positioning plate 212d and the middle plate 212 may be in an integrated structure. Alternatively, the positioning plate 212d and the middle plate 212 may be manufactured separately and then assembled. A specific assembly method includes but is not limited to welding, riveting, screwing, bonding, snapping, or the like.

With reference to FIG. 5, in the Y-axis direction, the speaker module 8 may abut against the frame 211. In this way, a quantity of positioning plates 212d used may be reduced. Certainly, in the Y-axis direction, the speaker module 8 may alternatively be arranged with a gap from the frame 211.

As shown in FIG. 10, the surface of the middle plate 212 that faces away from the first housing 1 is relatively flat and is configured to mount the screen 22. The second hole section A12 may be processed on this surface. The screen 22 may be mounted on the middle plate 212 by bonding, specifically by dispensing or gum. Using the gum as an example, the middle plate 212 may be provided with a screen gum 212f. The screen gum 212f may connect the screen 22 and the middle plate 212, and the screen gum 212f may further surround the hole opening of the second hole section A12 that faces away from the first housing 1 to be used as the foregoing fourth sealing portion C4.

The middle plate 212 may be provided with a fourth hole portion B1, and the second sound outlet cavity 2b may include an inner space of the fourth hole portion B1. The second sound emitting portion 82 may be connected to the fourth hole portion B1 to emit a sound into the fourth hole portion B1. An axial direction of the fourth hole portion B1 may be parallel to the Z-axis direction, or may be arranged at an angle to the Z-axis direction.

With reference to FIG. 5, the second sound outlet hole 2d may be a gap provided between the frame 211 and the screen 22. The specific formation method may be to cut the screen 22 and/or cut the frame 211. In this implementation, the second sound outlet hole 2d may be a long slit extending along the X-axis direction. Alternatively, the second sound outlet hole 2d may include a plurality of short slits spaced apart in the X-axis direction.

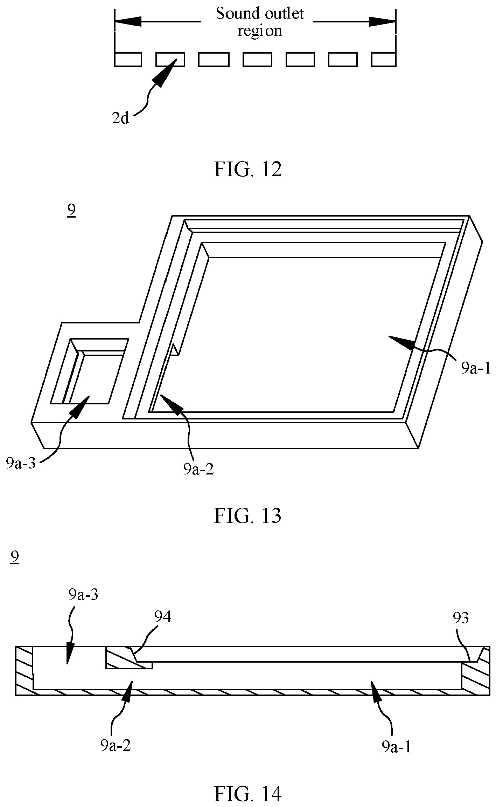

Refer to FIG. 11 and FIG. 12. FIG. 11 is a schematic diagram of a structure of a specific implementation of a second sound outlet hole, and FIG. 12 is a schematic diagram of a structure of another specific implementation of a second sound outlet hole.

For the implementation of the second sound outlet hole 2d being a long slit, reference may be made to FIG. 11. The implementation of the second sound outlet hole 2d including a plurality of short slits, reference may be made to FIG. 12. As shown in FIG. 11 and FIG. 12, the second sound outlet hole 2d forms a sound outlet region in the X-axis direction.

In some embodiments, a size of the sound outlet region in the X-axis direction is larger than that of the fourth hole portion B1. In view of this, in this embodiment of this application, there may be a transition space between the screen 22 and the middle plate 212, the transition space may communicate with the second sound outlet hole 2d and the fourth hole portion B1, and the second sound outlet cavity 2b may include the transition space. In addition, the transition space may be gradually expanded along a direction close to the second sound outlet hole 2d, so that a size transition between a sound region of the second sound outlet hole 2d and the fourth hole portion B1 may be formed, which can better avoid sudden changes in size, thereby improving the sound playback quality.

The transition space may be formed by cutting the middle plate 212 or cutting the screen 22. In the implementations of the accompanying drawings, as shown in FIG. 10, the surface of the middle plate 212 that faces the screen 22 may be provided with a transition slot 212b. The transition slot 212b may cooperate with the screen 22 to enclose the foregoing transition space.

In addition to the foregoing solution, the second sound outlet hole 2d may alternatively be provided on the frame 211. In this case, the second sound outlet hole 2d may be moved away from the screen 22. When a mobile phone film configured with liquid glue is pasted on the screen 22, a possibility of the glue blocking the second sound outlet hole 2d may be avoided to a large extent.

In actual use, the solution of arranging the second sound outlet hole 100b on the frame 211 and the solution of arranging the second sound outlet hole 100b between the screen 22 and the frame 211 may be adopted. That is to say, the second sound outlet hole 100b may be arranged at two positions.

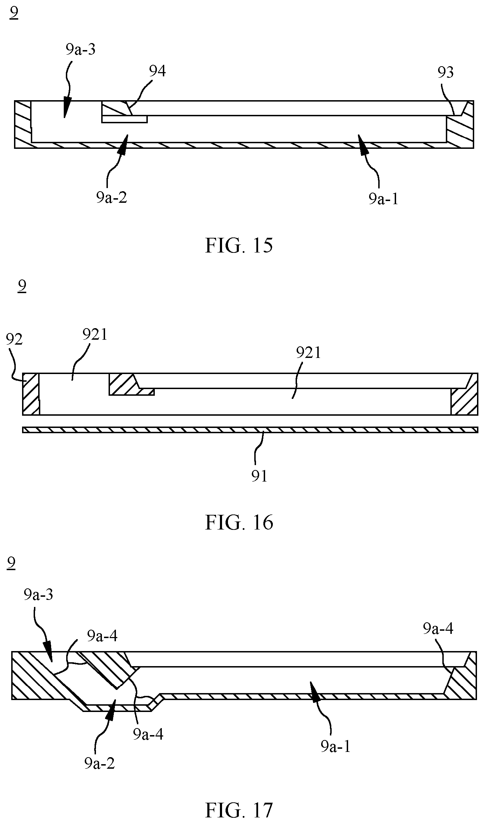

Refer to FIG. 13 to FIG. 15. FIG. 13 is a schematic diagram of a structure of an implementation of a speaker bracket, FIG. 14 is a cross-sectional view of FIG. 13, and FIG. 15 is a cross-sectional view of a modification solution of the speaker bracket shown in FIG. 13.

As shown in FIG. 13 and FIG. 14, the communication cavity 9a of the speaker bracket 9 may include a first sub-cavity 9a-1, a second sub-cavity 9a-2, and a third sub-cavity 9a-3 that are in communication in sequence. The first sub-cavity 9a-1 may be connected to the first sound emitting portion 81 and is configured to directly receive a sound wave from the first sound emitting portion 81. At least part of the second sub-cavity 9a-2 extends along the transverse direction to achieve a transverse extension design of the communication cavity 9a. The third sub-cavity 9a-3 is configured to be in communication with the first sound outlet cavity 2a. In implementations of FIG. 13 and FIG. 14, both the first sub-cavity 9a-1 and the third sub-cavity 9a-3 extend along the Z-axis direction, and the second sub-cavity 9a-2 extends as a whole in the X-axis direction.

In some other embodiments, extending directions of the first sub-cavity 9a-1 and the third sub-cavity 9a-3 may alternatively be arranged at an angle with the Z-axis direction, and the second sub-cavity 9a-2 may alternatively only partially extend in the X-axis direction. Alternatively, the entire communication cavity 9a may extend along an arc direction. That is to say, the structural form of the communication cavity 9a is not actually unique. In a specific implementation, those skilled in the art can adjust it according to actual requirements, as long as the requirements of use can be met.

The first sub-cavity 9a-1 is connected to the first sound emitting portion 81, and a size of the first sub-cavity 9a-1 is related to a size of the first sound emitting portion 81. Under the premise that the speaker module 8 is determined, a size of a cross-section perpendicular to an axial direction of the first sub-cavity 9a-1 is basically determined. In comparison, a cross-section perpendicular to an axial direction of the third sub-cavity 9a-3 has more design space. In some embodiments, an area of the cross-section perpendicular to the axial direction of the third sub-cavity 9a-3 may be designed to be smaller than the area of the cross-section perpendicular to the axial direction of the first sub-cavity 9a-1. In this way, the size of the speaker bracket 9 in the X-axis direction and the Y-axis direction may be relatively small, and the mounting space occupied by the speaker bracket 9 may further be reduced. In addition, since the area of the cross-section perpendicular to the axial direction of the third sub-cavity 9a-3 is smaller, correspondingly, an opening of the first hole portion A1 connected to the third sub-cavity 9a-3 may also be smaller, which can further reduce an opening area of the middle plate 212 and reduce the impact of the opening on the strength of the middle plate 212, thereby ensuring the overall structural strength of the middle frame 21.

The end of the speaker bracket 9 that faces the first sound emitting portion 81 forms a first connecting end. As mentioned above, a first sealing portion C1 is provided between the first connecting end and the first sound emitting portion 81.

In some implementations, the first connecting end may have a first sealing surface 93, the speaker module 8 has an axial direction, and the first sealing surface 93 may be perpendicular to the axial direction. In this implementation, an axial mounting end surface of the speaker module 8 and the first sealing surface 93 are basically parallel, and the first sealing portion C1 may be dispensing or gum.

In some other embodiments, the first connecting end may have a second sealing surface 94, the second sealing surface 94 may be arranged at an angle with the axial direction of the speaker module 8, and the angle is less than 90 degrees. In an assembled state, a sealing groove may be formed between the second sealing surface 94 and an outer peripheral wall of the speaker module 8, and the first sealing portion C1 may be arranged in the sealing groove. Specifically, the first sealing portion C1 may be dispensing or the like.

The second sealing surface 94 may be a flat surface, a conical surface, a spherical surface, or the like.

In practical application, the first connecting end may include the foregoing first sealing surface 93 and the second sealing surface 94. In this case, there are equivalent to two seals between the speaker module 8 and the speaker bracket 9, and the sealing effect is better. The connection reliability between the speaker module 8 and the speaker bracket 9 may also be higher. In some other embodiments, only one of the first sealing surface 93 and the second sealing surface 94 may be selected for the first connecting end. For example, the first connecting end may only be provided with the first sealing surface 93. Due to elimination of the second sealing surface 94, the sizes of the speaker bracket 9 in both the X-axis direction and the Y-axis direction may be reduced, further reducing the mounting space occupied by the speaker module 8. Alternatively, the first connecting end may be provided with only the second sealing surface 94. With reference to FIG. 15, using this solution, a portion framed by a dotted line shown in FIG. 15 may be removed, so that the size of the second sub-cavity 9a-2 in the Z-axis direction may be relatively great, obstruction in the extending direction of the communication cavity 9a may be relatively small, the eddy current formed in the sound wave transmission process may be relatively small, and the sound playback quality may be high.

Refer to FIG. 16. FIG. 16 is a cross-sectional view of another modification solution of the speaker bracket shown in FIG. 13.

As shown in FIG. 16, the speaker bracket 9 may be in a split structure and includes a bottom plate portion 91 and a frame portion 92, the frame portion 92 may be provided with a first through hole 921 and a second through hole 922, and the bottom plate portion 91 may be mounted on an axial end of the frame portion 92. In addition, the bottom plate portion 91 and the frame portion 92 may enclose the first sub-cavity 9a-1, the second sub-cavity 9a-2, and the third sub-cavity 9a-3, the first sub-cavity 9a-1 includes an inner space of the first through hole 921, and the third sub-cavity 9a-3 includes an inner space of the second through hole 922.

Since the extending direction of the communication cavity 9a is not on the same straight line, the foregoing split design may facilitate the processing of the speaker bracket 9 and the formation of the communication cavity 9a, especially the formation of the communication cavity 9a with a complex structure.

Embodiments of this application do not limit the connection method between the bottom plate portion 91 and the frame portion 92. In a specific implementation, those skilled in the art may determine according to actual requirements, as long as requirements for connection reliability and sealing performance can be met. For example, the bottom plate portion 91 and the frame portion 92 may be connected through welding, bonding, or another method. In this connection method, the bottom plate portion 91 and the frame portion 92 have better sealing performance after the connection is completed. Alternatively, the bottom plate portion 91 and the frame portion 92 may be connected through screwing, riveting, clamping, or another method. In this case, a sealing component in the form of a sealing ring may further be configured to ensure that the reliable sealing between the bottom plate portion 91 and the frame portion 92.

Refer to FIG. 17. FIG. 17 is a cross-sectional view of still another modification solution of the speaker bracket shown in FIG. 13.

As shown in FIG. 17, the speaker bracket 9 may alternatively be an integrated structure. In this case, inner wall surfaces of the first sub-cavity 9a-1, the second sub-cavity 9a-2, and the third sub-cavity 9a-3 may be provided with an easy demoulding bevel 9a-4 to facilitate the integral molding of the speaker bracket 9. A quantity and a setting position of inclined surfaces for easy demoulding 9a-4 are not limited herein. In a specific implementation, those skilled in the art may design according to actual requirements.

In fact, the speaker bracket 9 may alternatively be machined and formed by the CNC or the like.

There are various types of electronic components configured in the electronic device 100. In some scenarios, some components may be placed close to the speaker module 8 in the X-axis direction. In this way, interference may occur with the mounting of the speaker module 8, and the type of the component causing interference is not limited herein.

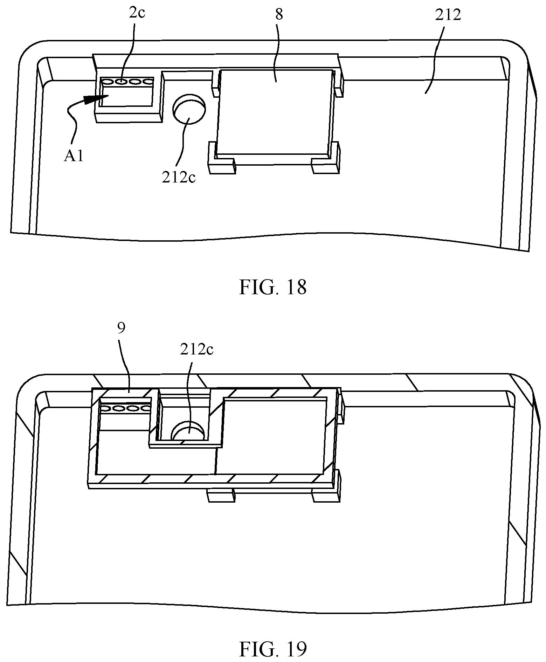

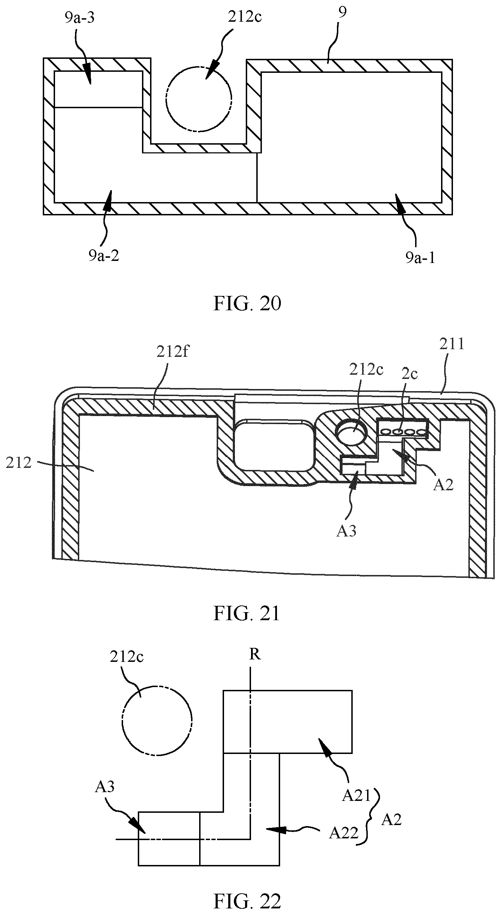

Refer to FIG. 18 to FIG. 20. FIG. 18 is a diagram of a mounting structure of a middle frame and a speaker module in a second embodiment of the electronic device shown in FIG. 1, FIG. 19 is a cross-sectional view of the middle frame and the speaker module shown in FIG. 18 after being configured with a speaker bracket, and FIG. 20 is a cross-sectional view of the speaker bracket shown in FIG. 19 perpendicular to a Z-axis direction.

As shown in FIG. 18, the middle plate 212 is further provided with a camera hole 212c. In the X-axis direction, the camera hole 212c is located between the speaker module 8 and the first hole portion A1. The camera hole 212c is opposite to the camera module. In this scenario, the camera module is a component that may interfere with the speaker bracket 9. In view of this, in this embodiment of this application, the structural form of the speaker bracket 9 may be improved, so that the speaker bracket 9 may bypass the camera hole 212c.

Specifically, as shown in FIG. 19 and FIG. 20, a projection of the second sub-cavity 9a-2 on the second housing 2 along the thickness direction may be set to be L-shaped to avoid the camera module. In this case, the first sub-cavity 9a-1, the second sub-cavity 9a-2, and the third sub-cavity 9a-3 may be arranged around an outer side of the camera hole 212c.

It should be pointed out that the projection of the second sub-cavity 9a-2 on the second housing 2 along the thickness direction may alternatively be in other shapes. As long as the projection does not extend on the same straight line, the technical objective of avoiding possible interference components such as the camera module may be achieved. For example, the projection may extend on a polyline formed by a combination of a plurality of straight lines; or the projection may extend on at least one arc; or the projection may further extend on a complex curve formed by a combination of straight lines and arcs.

In addition, the structural form of the first sound outlet cavity 2a may also be adjusted to avoid components that may interfere.

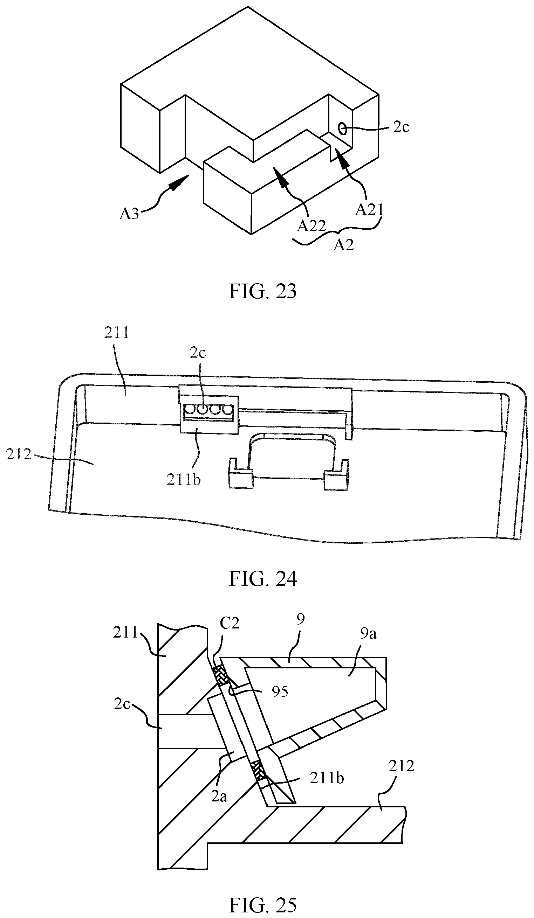

Refer to FIG. 21 to FIG. 23. FIG. 21 is a diagram of a partial structure of a side of a middle frame facing away from a first housing in a third embodiment of the electronic device shown in FIG. 1, FIG. 22 is a schematic diagram of a structure of orthographic projections of a second hole portion and a third hole portion shown in FIG. 21 on the middle plate, and FIG. 23 is a cross-sectional view of the second hole portion and the third hole portion shown in FIG. 22 on a line R.

As shown in FIG. 21, the middle plate 212 may be provided with a second hole portion A2 and a third hole portion A3 that are in communication with each other, and the first sound outlet cavity 2a may include inner spaces of the second hole portion A2 and the third hole portion A3. Two axial ends of the second hole portion A2 may be in a blocked state, an end of the third hole portion A3 that faces away from the first housing 1 may be in the blocked state, and an end of the third hole portion A3 that faces the first housing 1 may be in communication with the communication cavity 9a. The first sound outlet hole 2c is arranged on the frame 211, and the first sound outlet hole 2c is in communication with the second hole portion A2.

In addition, as shown in FIG. 22, orthographic projections of the second hole portion A2 and the third hole portion A3 on the middle plate 212 may be in a Z-shape to avoid the camera module that may interfere. Certainly, similar to the foregoing second sub-cavity 9a-2, the projections of the second hole portion A2 and the third hole portion A3 are not limited to the foregoing Z-shape, as long as the projections do not extend on the same straight line, so that the components that may interfere may be avoided. For specific possible structural forms, refer to the foregoing descriptions of the second sub-cavity 9a-2, and no repeated description is made herein.

The ends of the second hole portion A2 and the third hole portion A3 that face away from the first housing 1 may be blocked by the screen 22. Specifically, a screen gum 212f is provided on the side of the middle plate 212 that faces away from the first housing 1. The screen gum 212f may surround hole openings of the second hole portion A2 and the third hole portion A3 on the surface of the middle plate 212 that faces away from the first housing 1. The screen gum 212f is configured to connect the screen 22. Certainly, blocking components in the form of blocking plates, sealing packings, or the like may alternatively be used to block the ends of the second hole portion A2 and the third hole portion A3 that face away from the first housing 1.

The end of the second hole portion A2 that faces the first housing 1 may also be blocked by the blocking component. Alternatively, as shown in FIG. 23, the second hole portion A2 may also be directly configured as a blind hole, so that the end of the second hole portion A2 that faces the first housing 1 may naturally be in the blocked state.

In some optional implementations, the second hole portion A2 may include a third hole section A21 and a fourth hole section A22 that are in communication with each other, where the third hole section A21 may be directly in communication with the first sound outlet hole 2c, and the second hole section A12 may be configured to communicate with the first hole section A21 and the third hole portion A3. For the electronic device 100 in which the speaker module 8 and the first sound outlet hole 2c are arranged at a certain position, the third hole section A21 and the third hole portion A3 are also arranged in a certain position. In this way, the fourth hole section A22 connecting the third hole section A21 and the third hole portion A3 is an adjustable hole section, and the extending direction on the middle plate 212 may have a variety of choices to meet the design of different forms of products.

With reference to FIG. 23, a size of the third hole section A21 in the Z-axis direction is required. The third hole section A21 is required to be deep enough to be in communication with the first sound outlet hole 2c, and the size requirement of the fourth hole section A22 in the Z-axis direction may be relaxed, as long as the fourth hole section A22 can communicate with the third hole section A21 and the third hole portion A3 and meet the requirements of sound transmission quality. In this arrangement, in specific practice, the size of the fourth hole section A22 in the Z-axis direction may be set to be smaller than that of the third hole section A21, that is, the fourth hole section A22 may be set shallower, to reduce the digging volume of the middle plate 212, thereby reducing the impact on the strength of the middle plate 212, so that the middle frame 21 can have a relatively high structural strength.

Refer to FIG. 24 and FIG. 25. FIG. 24 is a diagram of a partial structure of a side of a middle frame facing a first housing in a fourth embodiment of the electronic device shown in FIG. 1, and FIG. 25 is a diagram of a connecting structure of a first sealing end surface of the middle frame shown in FIG. 24 and a speaker bracket.

As shown in FIG. 24 and FIG. 25, the first sound outlet cavity 2a is further arranged on the frame 211, and the first sound outlet hole 2c is also arranged on the frame 211. The second connecting end of the speaker bracket 9 may be directly connected to the frame 211 and connect the communication cavity 9a to the first sound outlet cavity 2a. The frame 211 has a first sealing end surface 211b, and the second connecting end has a second sealing end surface 95. The foregoing second sealing portion C2 may be arranged between the first sealing end surface 211b and the second sealing end surface 95 to achieve sealing at the connection position between the communication cavity 9a and the first sound outlet cavity 2a.

The first sealing end surface 211b and the second sealing end surface 95 may be parallel. In implementations of FIG. 24 and FIG. 25, both the first sealing end surface 211b and the second sealing end surface 95 are arranged at an angle with the Z-axis direction. In some other implementations that are not claimed, the first sealing end surface 211b and the second sealing end surface 95 may also be parallel to the Z-axis direction and perpendicular to the Y-axis direction. The first sealing end surface 211b and the second sealing end surface 95 may also form a certain angle. These are all feasible in specific practice.

In some optional implementations that are not claimed, the first sound outlet cavity 2a may not exist. In this case, the communication cavity 9a may be directly in communication with the first sound outlet hole 2c. Similarly, the second sound outlet cavity 2b may not exist. In this case, the second sound emitting portion 82 directly emits a sound through the second sound outlet hole 2d.

Still refer to FIG. 3 to FIG. 5. In some embodiments, the electronic device 100 may further include a main board bracket 31. The main board bracket 31 is configured to fix the main board. The main board bracket 31 may be press-connected to the speaker bracket 9 along the Z-axis direction to prevent the speaker bracket 9 from lifting after the mounting is completed, which may improve the mounting reliability of the speaker bracket 9.

In some other implementations, the speaker bracket 9 may alternatively be mounted on the main board bracket 31. The mounting method between the speaker bracket 9 and the main board bracket 31 includes but is not limited to screwing, bonding, welding, snapping, riveting, or the like, as long as the reliable connection can be ensured. Alternatively, the speaker bracket 9 and the main board bracket 31 may alternatively be of an integrated structure. In this way, a quantity of internal components of the electronic device 100 may further be reduced to simplify the mounting process of the electronic device 100.

In some other embodiments, the speaker bracket 9 may alternatively directly abut against the first housing 1 in the Z-axis direction. In this implementation, the main board bracket 31 may be provided with an escape hole for avoiding the speaker module 8 and the speaker bracket 9. Alternatively, the main board bracket 31 may be arranged at a position avoiding the speaker module 8 and the speaker bracket 9. For ease of description, the speaker module 8 and the speaker bracket 9 may be collectively referred to as a speaker assembly, and the main board bracket 31 may be located on a side of the speaker assembly in the X-axis direction or the Y-axis direction to avoid mounting interference.

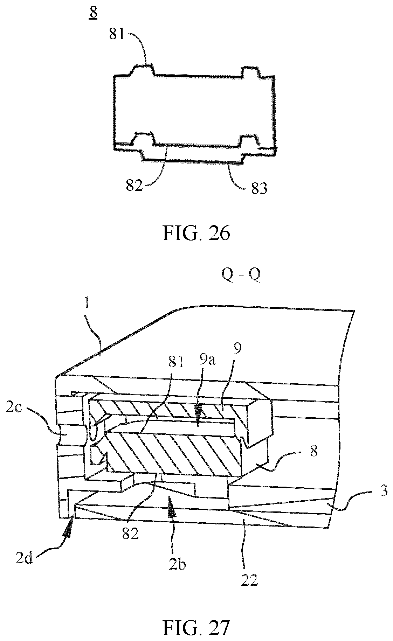

Refer to FIG. 26. FIG. 26 is a schematic diagram of a structure of a speaker module.

As shown in FIG. 26, the speaker module 8 may include a first sound emitting portion 81 and a second sound emitting portion 82. At least one of the first sound emitting portion 81 and the second sound emitting portion 82 may further be provided with a dustproof net 83 for reducing the impact of dust on the two sound emitting portions.

Using the second sound emitting portion 82 provided with the dustproof net 83 as an example, a gap may be provided between the dustproof net 83 and the second sound emitting portion 82, which can largely prevent the second sound emitting portion 82 from flapping the dustproof net 83 during vibration and the dustproof net 83 from being broken and/or the second sound emitting portion 82 from being damaged, and is beneficial to ensure the service life of the second sound emitting portion 82 and the dustproof net 83.

In some other embodiments, the dustproof net 83 may not be directly arranged on the speaker module 8. The dustproof net 83 may alternatively be arranged at other positions, such as the connection position between the second connecting end and the second housing 2, and specifically may be fixedly assembled through the foregoing sealing portion. For example, the second sealing portion C2 may be sealant, and the dustproof net 83 arranged between the second connecting end and the second housing 2 may be fixed through the second sealing portion C2.

A quantity of dustproof nets 83 may be one or more, and is not limited herein.

The speaker module 8 is further configured with a rear cavity, and the rear cavity may be a closed rear cavity to reduce the impact on other structural components 100 inside the electronic device. For example, the rear cavity may be arranged inside the speaker bracket 9, or may be formed by all or part of the speaker bracket 9, the middle frame 21, the first housing 1, the main board bracket 31, and other components. Certainly, the foregoing rear cavity may alternatively be an open rear cavity.

During specific work, the main board 3 may control the first sound emitting portion 81 and the second sound emitting portion 82 to emit sound waves in opposite phases respectively to offset sound leakage, thereby improving the privacy of hand-held calls. In a scenario of external sound playback, the first sound emitting portion 81 and the second sound emitting portion 82 may also emit the sound waves in the same phase to enhance a stereo effect. It can be understood that hand-held calls and external sound playback are two opposite scenarios. In the hand-held call scenario, users prefer that the sound can only be heard by themselves, and have higher privacy requirements for calls.

In the mounting process of the speaker module 8, the speaker module 8 and the speaker bracket 9 are usually connected first to form a speaker assembly, and then the speaker assembly is mounted on the second housing 2. In a conventional solution, the communication cavity of the speaker bracket does not extend in the X-axis direction, but an opening extending in the Y-axis direction is directly provided, and then directly connects the communication cavity along the Y-axis direction to the first sound outlet hole 2c on the frame 211, and connects the second sound emitting portion 82 in the Z-axis direction to the middle plate. A second sealing portion C2 is arranged between the speaker bracket 9 and the frame 211, and a third sealing portion C3 is arranged between the speaker module and the middle plate. In this solution, the mounting direction of the speaker assembly includes the Y-axis direction and the Z-axis direction. During mounting, it is easy to cause scratches and scrapes on the second sealing portion C2 and the third sealing portion C3. In severe cases, the second sealing portion C2 and the third sealing portion C3 may be damaged, which is not conducive to ensuring reliable of the speaker assembly, and sound leakage may occur.

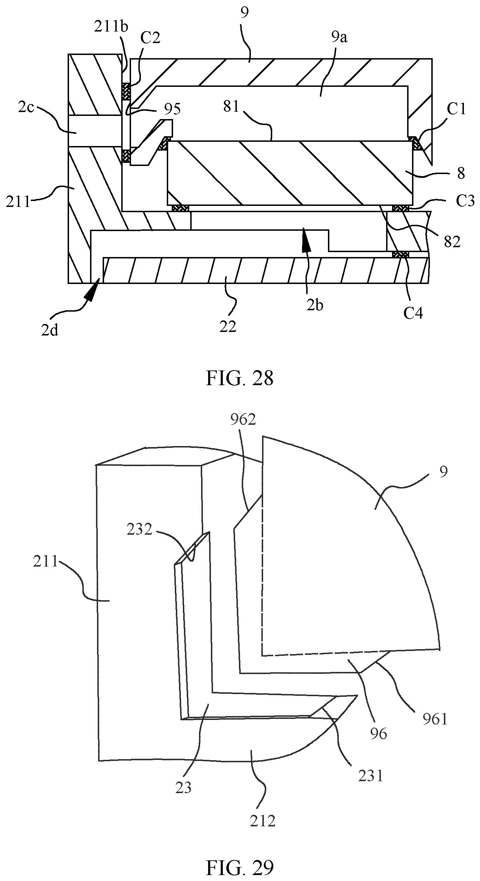

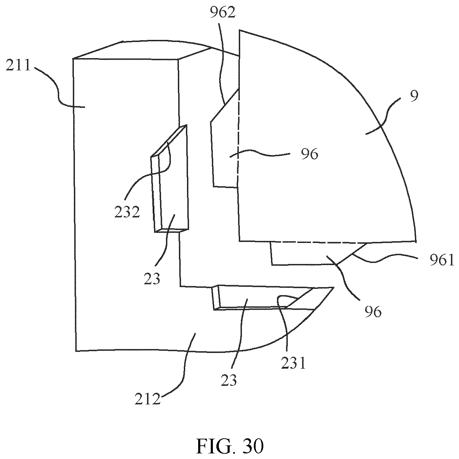

Refer to FIG. 27 to FIG. 30. FIG. 27 is a cross-sectional view of a fifth embodiment of the electronic device shown in FIG. 1 in a Q-Q direction, FIG. 28 is a front view of a partial structure in FIG. 27, FIG. 29 is a diagram of a mounting structure of a speaker bracket and a middle frame in the electronic device shown in FIG. 27, and FIG. 30 is a schematic diagram of a structure of a modification solution of FIG. 29.

In view of this, embodiments of this application further provide an electronic device 100. As shown in FIG. 27 to FIG. 30, the speaker bracket 9 is configured with a guide portion 96, and the guide portion 96 is configured with a first guide surface 961 and a second guide surface 962, where the first guide surface 961 and the Y-axis direction form an angle of less than 90 degrees, and the second guide surface 962 and the Z-axis direction form an angle of less than 90 degrees. The second housing 2 is provided with a guide groove 23, and the guide groove 23 has a first matching surface 231 and a second matching surface 232. Extending directions of the first guide surface 961 and the first matching surface 231 are consistent, and extending directions of the second guide surface 962 and the second matching surface 232 may be consistent, so that after assembly, the first guide surface 961 may be fitted with the first matching surface 231, and the second guide surface 962 may be fitted with the second matching surface 232.

In this arrangement, before the guide portion 96 enters the guide groove 23, the guide portion 96 cooperates with the middle plate 212 and the frame 211 to support the speaker assembly to prevent the speaker bracket 9 from being in contact with the second sealing portion C2 and the third sealing portion C3. After the guide portion 96 enters the guide groove 23, through the guide cooperation between the first guide surface 961 and the first matching surface 231, and the guide cooperation between the second guide surface 962 and the second matching surface 232, the speaker assembly may gradually press the second sealing portion C2 in the Y-axis direction, and gradually press the third sealing portion C3 in the Z-axis direction, which not only ensures the reliability of the connection, but also reduces the possibility of damage to the second sealing portion C2 and the third sealing portion C3.

In some embodiments, the guide portion 96 may only be provided with the first guide surface 961. Correspondingly, the guide groove 23 may be provided with only the first matching surface 231. In this case, the speaker assembly may be assembled close to the frame 211 along the Y-axis direction. Specifically, when the guide portion 96 does not enter the guide groove 23, the guide portion 96 may form a support with the middle plate 212 to prevent the speaker assembly from scratching or scraping the third sealing portion C3. After the guide portion 96 enters the guide groove 23, through guide cooperation between the first guide surface 961 and the first matching surface 231, the speaker assembly may gradually press the second sealing portion C2 in the Y-axis direction, and gradually press the third sealing portion C3 in the Z-axis direction.

In some other embodiments, the guide portion 96 may also only be provided with the second guide surface 962. Correspondingly, the guide groove 23 may also be provided with only the second matching surface 232. In this case, the speaker assembly may be assembled close to the middle plate 212 along the Z-axis direction. Specifically, when the guide portion 96 does not enter the guide groove 23, the guide portion 96 may form a support with the frame 211 to prevent the speaker assembly from scratching or scraping the second sealing portion C2. After the guide portion 96 enters the guide groove 23, through guide cooperation between the second guide surface 962 and the second matching surface 232, the speaker assembly may gradually press the second sealing portion C2 in the Y-axis direction, and gradually press the third sealing portion C3 in the Z-axis direction.

A quantity of guide portions 96 may be one. For this implementation, refer to FIG. 29. Correspondingly, a quantity of guide grooves 23 may also be one. The quantity of guide portions 96 may be two. For this implementation, refer to FIG. 30. Correspondingly, the quantity of guide grooves 23 may also be two. Certainly, the quantity of guide portions 96 may be more. Correspondingly, the quantity of guide grooves 23 may also be more, and the guide portions 96 may be inserted into the guide grooves 23 in one-to-one correspondence.

The second sealing portion C2 may be specifically between the first sealing end surface 211b and the second sealing end surface 95, and the first sealing end surface 211b and the second sealing end surface 95 may be parallel to the Z-axis direction.

In some other embodiments, the guide portion 96 may also be provided on the second housing 2, and the guide groove 23 may also be provided on the speaker bracket 9.

In some optional implementations, the second sealing portion C2 may also be pressed between the speaker bracket 9 and the frame 211 along the X-axis direction. In this case, the first guide surface 961 may also be arranged at an angle with the X-axis direction.

In implementations of FIG. 27 to FIG. 30, the structural form of the second sound outlet cavity 2b and the structural form of each sealing portion may be referred to the foregoing content, and repeated descriptions are not provided herein.

## Claims

1. An electronic device (100), comprising a first housing (1), a second housing (2), a speaker module (8), and a speaker bracket (9), wherein the first housing (1) and the second housing (2) are connected to each other along a thickness direction of the electronic device (100), and the second housing (2) is further provided with a first sound outlet hole (2c) and a second sound outlet hole (2d);
the speaker module (100) comprises a first sound emitting portion (81) and a second sound emitting portion (82), the first sound emitting portion (81) faces the first housing (1), and the second sound emitting portion (82) faces the second housing (2); and
the speaker bracket (9) is provided with a communication cavity (9a), at least part of the communication cavity extends along a transverse direction of the electronic device, the speaker bracket (9) has a first connecting end and a second connecting end spaced apart in the transverse direction of the electronic device (100), the first connecting end is sealingly assembled to the first sound emitting portion (81), the first sound emitting portion (81) is capable of emitting a sound wave into the communication cavity (9a), the second connecting end is sealingly assembled to the second housing (2), the communication cavity (9a) is in communication with the first sound outlet hole (2c), the second sound emitting portion (82) is sealingly assembled to the second housing (2), and the second sound emitting portion (82) is capable of emitting a sound wave into the second sound outlet hole (2d), wherein the second housing (2) comprises a middle frame (21), the middle frame (21) comprises a frame (211), and the frame (211) is provided with a first sound outlet cavity (2a) and the first sound outlet hole (2c), and the first sound outlet cavity (2a) is configured to communicate with the first sound outlet hole (2c) and the communication cavity (9a), wherein the frame (211) is provided with a first sealing end surface (211b) surrounding the first sound outlet cavity (2a), the first sealing end surface (211b) is arranged at an angle with the thickness direction, the second connecting end has a second sealing end surface (95), and the first sealing end surface (211b) is sealingly assembled with the second sealing end surface (95).

2. The electronic device according to claim 1, wherein the communication cavity (9a) comprises a first sub-cavity (9a-1), a second sub-cavity (9a-2), and a third sub-cavity (9a-3) that are in communication in sequence, the first sub-cavity (9a-1) is connected to the first sound emitting portion (81), and the third sub-cavity (9a-3) is in communication with the first sound outlet hole (2c).

3. The electronic device according to claim 2, wherein the speaker bracket (9) comprises a bottom plate portion (91) and a frame portion (92) that are separate, the frame portion (92) is provided with a first through hole (921) and a second through hole (922), the bottom plate portion (91) is mounted on an axial end of the frame portion (92), the bottom plate portion (91) and the frame portion (92) enclose the first sub-cavity (9a-1), the second sub-cavity (9a-2), and the third sub-cavity (9a-3), the first sub-cavity (9a-1) comprises an inner space of the first through hole, and the third sub-cavity (9a-3) comprises an inner space of the second through hole.

4. The electronic device according to claim 2, wherein the speaker bracket (9) is of an integrated structure, and inner wall surfaces of the first sub-cavity (9a-1), the second sub-cavity (9a-2), and the third sub-cavity (9a-3) are provided with easy demoulding bevels.

5. The electronic device according to any one of claims 2 to 4, wherein the first connecting end has a first sealing surface (93), a direction in which the first sound emitting portion (81) and the second sound emitting portion (82) are arranged opposite to each other is an axial direction of the speaker module (8), the first sealing surface (93) is perpendicular to the axial direction of the speaker module (8), and the first sound emitting portion (81) is sealingly mounted on the first sealing surface (93), wherein the first connecting end has a second sealing surface (94), the second sealing surface (94) and the axial direction of the speaker module (8) are arranged at an angle, the angle is less than 90 degrees, and the first sound emitting portion (81) is sealingly mounted on the second sealing surface (94).

## Patentansprüche

1. Elektronische Vorrichtung (100), umfassend ein erstes Gehäuse (1), ein zweites Gehäuse (2), ein Lautsprechermodul (8) und eine Lautsprecherhalterung (9), wobei das erste Gehäuse (1) und das zweite Gehäuse (2) miteinander entlang einer Dickenrichtung der elektronischen Vorrichtung (100) verbunden sind und das zweite Gehäuse (2) ferner mit einem ersten Schallaustrittsloch (2c) und einem zweiten Schallaustrittsloch (2d) versehen ist;
das Lautsprechermodul (100) einen ersten schallemittierenden Abschnitt (81) und einen zweiten schallemittierenden Abschnitt (82) umfasst, wobei der erste schallemittierende Abschnitt (81) dem ersten Gehäuse (1) zugewandt ist und der zweite schallemittierende Abschnitt (82) dem zweiten Gehäuse (2) zugewandt ist; und
die Lautsprecherhalterung (9) mit einem Verbindungshohlraum (9a) versehen ist, wobei sich mindestens ein Teil des Verbindungshohlraums entlang einer Querrichtung der elektronischen Vorrichtung erstreckt, die Lautsprecherhalterung (9) ein erstes Verbindungsende und ein zweites Verbindungsende aufweist, die in der Querrichtung der elektronischen Vorrichtung (100) beabstandet sind, das erste Verbindungsende abdichtend an dem ersten schallemittierenden Abschnitt (81) montiert ist, der erste schallemittierende Abschnitt (81) dazu in der Lage ist, eine Schallwelle in den Verbindungshohlraum (9a) zu emittieren, das zweite Verbindungsende abdichtend an dem zweiten Gehäuse (2) montiert ist, der Verbindungshohlraum (9a) in Verbindung mit dem ersten Schallaustrittsloch (2c) steht, der zweite schallemittierende Abschnitt (82) abdichtend an dem zweiten Gehäuse (2) montiert ist und der zweite schallemittierende Abschnitt (82) dazu in der Lage ist, eine Schallwelle in das zweite Schallaustrittsloch (2d) zu emittieren, wobei das zweite Gehäuse (2) einen Mittelrahmen (21) umfasst, der Mittelrahmen (21) einen Rahmen (211) umfasst und der Rahmen (211) mit einem ersten Schallaustrittshohlraum (2a) und dem ersten Schallaustrittsloch (2c) versehen ist und der erste Schallaustrittshohlraum (2a) dazu eingerichtet ist, mit dem ersten Schallaustrittsloch (2c) und dem Verbindungshohlraum (9a) in Verbindung zu stehen, wobei der Rahmen (211) mit einer ersten Dichtungsendfläche (211b) versehen ist, die den ersten Schallaustrittshohlraum (2a) umgibt, die erste Dichtungsendfläche (211b) in einem Winkel zur Dickenrichtung angeordnet ist, das zweite Verbindungsende eine zweite Dichtungsendfläche (95) aufweist und die erste Dichtungsendfläche (211b) abdichtend mit der zweiten Dichtungsendfläche (95) montiert ist.

2. Elektronische Vorrichtung nach Anspruch 1, wobei der Verbindungshohlraum (9a) einen ersten Teilhohlraum (9a-1), einen zweiten Teilhohlraum (9a-2) und einen dritten Teilhohlraum (9a-3) umfasst, die nacheinander in Verbindung stehen, wobei der erste Teilhohlraum (9a-1) mit dem ersten schallemittierenden Abschnitt (81) verbunden ist und der dritte Teilhohlraum (9a-3) in Verbindung mit dem ersten Schallaustrittsloch (2c) steht.

3. Elektronische Vorrichtung nach Anspruch 2, wobei die Lautsprecherhalterung (9) einen Bodenplattenabschnitt (91) und einen Rahmenabschnitt (92) umfasst, die separat sind, wobei der Rahmenabschnitt (92) mit einem ersten Durchgangsloch (921) und einem zweiten Durchgangsloch (922) versehen ist, der Bodenplattenabschnitt (91) an einem axialen Ende des Rahmenabschnitts (92) montiert ist, der Bodenplattenabschnitt (91) und der Rahmenabschnitt (92) den ersten Teilhohlraum (9a-1), den zweiten Teilhohlraum (9a-2) und den dritten Teilhohlraum (9a-3) umschließen, der erste Teilhohlraum (9a-1) einen Innenraum des ersten Durchgangslochs umfasst und der dritte Teilhohlraum (9a-3) einen Innenraum des zweiten Durchgangslochs umfasst.

4. Elektronische Vorrichtung nach Anspruch 2, wobei die Lautsprecherhalterung (9) einen einstückigen Aufbau aufweist und Innenwandflächen des ersten Teilhohlraums (9a-1), des zweiten Teilhohlraums (9a-2) und des dritten Teilhohlraums (9a-3) mit leichten Entformungsschrägen versehen sind.

5. Elektronische Vorrichtung nach einem der Ansprüche 2 bis 4, wobei das erste Verbindungsende eine erste Dichtungsfläche (93) aufweist, wobei eine Richtung, in der der erste schallemittierende Abschnitt (81) und der zweite schallemittierende Abschnitt (82) einander gegenüberliegend angeordnet sind, eine axiale Richtung des Lautsprechermoduls (8) ist, die erste Dichtungsfläche (93) senkrecht zur axialen Richtung des Lautsprechermoduls (8) steht und der erste schallemittierende Abschnitt (81) abdichtend auf der ersten Dichtungsfläche (93) montiert ist, wobei das erste Verbindungsende eine zweite Dichtungsfläche (94) aufweist, die zweite Dichtungsfläche (94) und die axiale Richtung des Lautsprechermoduls (8) in einem Winkel angeordnet sind, wobei der Winkel kleiner als 90 Grad ist, und der erste schallemittierende Abschnitt (81) abdichtend auf der zweiten Dichtungsfläche (94) montiert ist.

## Revendications

1. Dispositif électronique (100), comprenant un premier boîtier (1), un second boîtier (2), un module de haut-parleur (8), et un support de haut-parleur (9), dans lequel le premier boîtier (1) et le second boîtier (2) sont connectés l'un à l'autre le long d'une direction d'épaisseur du dispositif électronique (100), et le second boîtier (2) est en outre pourvu d'un premier trou de sortie de son (2c) et d'un second trou de sortie de son (2d) ;
le module de haut-parleur (100) comprend une première partie d'émission de son (81) et une seconde partie d'émission de son (82), la première partie d'émission de son (81) fait face au premier boîtier (1), et la seconde partie d'émission de son (82) fait face au second boîtier (2) ; et
le support de haut-parleur (9) est pourvu d'une cavité de communication (9a), au moins une partie de la cavité de communication s'étend le long d'une direction transversale du dispositif électronique, le support de haut-parleur (9) présente une première extrémité de connexion et une seconde extrémité de connexion espacées dans la direction transversale du dispositif électronique (100), la première extrémité de connexion est assemblée de manière étanche à la première partie d'émission de son (81), la première partie d'émission de son (81) est capable d'émettre une onde sonore dans la cavité de communication (9a), la seconde extrémité de connexion est assemblée de manière étanche au second boîtier (2), la cavité de communication (9a) est en communication avec le premier trou de sortie de son (2c), la seconde partie d'émission de son (82) est assemblée de manière étanche au second boîtier (2), et la seconde partie d'émission de son (82) est capable d'émettre une onde sonore dans le second trou de sortie de son (2d), dans lequel le second boîtier (2) comprend un cadre central (21), le cadre central (21) comprend un cadre (211), et le cadre (211) est pourvu d'une première cavité de sortie de son (2a) et du premier trou de sortie de son (2c), et la première cavité de sortie de son (2a) est configurée pour communiquer avec le premier trou de sortie de son (2c) et la cavité de communication (9a), dans lequel le cadre (211) est pourvu d'une première surface d'extrémité d'étanchéité (211b) entourant la première cavité de sortie de son (2a), la première surface d'extrémité d'étanchéité (211b) est agencée selon un angle avec la direction d'épaisseur, la seconde extrémité de connexion présente une seconde surface d'extrémité d'étanchéité (95), et la première surface d'extrémité d'étanchéité (211b) est assemblée de manière étanche avec la seconde surface d'extrémité d'étanchéité (95).

2. Dispositif électronique selon la revendication 1, dans lequel la cavité de communication (9a) comprend une première sous-cavité (9a-1), une deuxième sous-cavité (9a-2), et une troisième sous-cavité (9a-3) qui sont en communication séquentielle, la première sous-cavité (9a-1) est connectée à la première partie d'émission de son (81), et la troisième sous-cavité (9a-3) est en communication avec le premier trou de sortie de son (2c).

3. Dispositif électronique selon la revendication 2, dans lequel le support de haut-parleur (9) comprend une partie de plaque de fond (91) et une partie de cadre (92) qui sont séparées, la partie de cadre (92) est pourvue d'un premier trou traversant (921) et d'un second trou traversant (922), la partie de plaque de fond (91) est montée sur une extrémité axiale de la partie de cadre (92), la partie de plaque de fond (91) et la partie de cadre (92) délimitent la première sous-cavité (9a-1), la deuxième sous-cavité (9a-2), et la troisième sous-cavité (9a-3), la première sous-cavité (9a-1) comprend un espace intérieur du premier trou traversant, et la troisième sous-cavité (9a-3) comprend un espace intérieur du second trou traversant.

4. Dispositif électronique selon la revendication 2, dans lequel le support de haut-parleur (9) est d'une structure intégrée, et les surfaces de paroi intérieure de la première sous-cavité (9a-1), de la deuxième sous-cavité (9a-2), et de la troisième sous-cavité (9a-3) sont pourvues de dépouilles de démoulage facile.

5. Dispositif électronique selon l'une quelconque des revendications 2 à 4, dans lequel la première extrémité de connexion présente une première surface d'étanchéité (93), une direction dans laquelle la première partie d'émission de son (81) et la seconde partie d'émission de son (82) sont disposées à l'opposé l'une de l'autre est une direction axiale du module de haut-parleur (8), la première surface d'étanchéité (93) est perpendiculaire à la direction axiale du module de haut-parleur (8), et la première partie d'émission de son (81) est montée de manière étanche sur la première surface d'étanchéité (93), dans lequel la première extrémité de connexion présente une seconde surface d'étanchéité (94), la seconde surface d'étanchéité (94) et la direction axiale du module de haut-parleur (8) sont agencées selon un angle, l'angle est inférieur à 90 degrés, et la première partie d'émission de son (81) est montée de manière étanche sur la seconde surface d'étanchéité (94).
